(19) Europäisches Patentamt
European Patent Office
Office européen des brevets

(11) **EP 4 654 227 A1**

(12) **EUROPEAN PATENT APPLICATION**
published in accordance with Art. 153(4) EPC

(43) Date of publication:
**26.11.2025 Bulletin 2025/48**

(21) Application number: **24744632.1**

(22) Date of filing: **16.01.2024**

(51) International Patent Classification (IPC):
***H01B 13/00*** *(2006.01)* ***H01B 1/10*** *(2006.01)*
***H01M 10/0562*** *(2010.01)*

(52) Cooperative Patent Classification (CPC):
**H01B 1/10; H01B 13/00; H01M 10/0562;**
Y02E 60/10

(86) International application number:
**PCT/JP2024/000882**

(87) International publication number:
**WO 2024/154710 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.01.2023 JP 2023004969**

(71) Applicant: **Idemitsu Kosan Co.,Ltd.**
**Tokyo 100-8321 (JP)**

(72) Inventors:
- **YAMADA, Hiroaki**
  **Tokyo 100-8321 (JP)**
- **SHIBATA, Masayuki**
  **Tokyo 100-8321 (JP)**

(74) Representative: **Vossius & Partner Patentanwälte Rechtsanwälte mbB**
**Siebertstrasse 3**
**81675 München (DE)**

(54) **METHOD FOR MANUFACTURING SULFIDE SOLID ELECTROLYTE**

(57) Provided is a method for producing a sulfide solid electrolyte, which is capable of producing a sulfide solid electrolyte having a target crystal structure, is capable of reducing the amount of energy to be input during production, and includes heating a raw material-containing substance while bringing hydrogen sulfide into contact with the raw material-containing substance (heating (1)), in which the temperature ($T_1$ (°C)) of the heating (1) is 170°C or lower.

[Fig. 1]

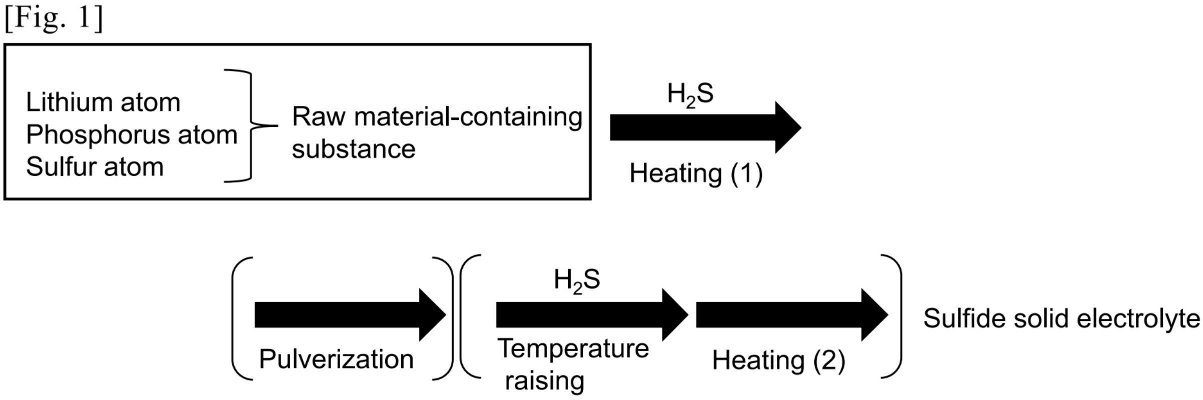


EP 4 654 227 A1

## Description

### Technical Field

The present invention relates to a method for producing a sulfide solid electrolyte.

### Background Art

In recent years, with the rapid spread of information-related devices such as personal computers, video cameras, and mobile phones, and communication devices, the development of batteries used as a power source for the devices has been regarded as important. Conventionally, an electrolytic solution containing a flammable organic solvent has been used as a battery used for such an application, but by making the battery all solid, the flammable organic solvent in the battery becomes unnecessary. Accordingly, simplification of a safety device is achieved, the production cost is reduced, and the productivity is also improved, and thus a battery in which an electrolytic solution is replaced with a sulfide solid electrolyte layer, that is, an all solid-state battery has been developed.

Conventionally, a sulfide solid electrolyte has been known as a sulfide solid electrolyte used in a sulfide solid electrolyte layer. Although the sulfide solid electrolyte has a high ionic conductivity, it is desired to develop a method for producing a sulfide solid electrolyte that is more convenient and has high quality.

As a method for producing a sulfide solid electrolyte, a production method in which a raw material for producing the sulfide solid electrolyte is heated together with hydrogen sulfide ($H_2S$) is known (PTLs 1 to 3).

### Citation List

### Patent Literature

PTL 1:JP 2014-167845 A
PTL 2:JP 2018-97954 A
PTL 3:WO 2020/213340 A

### Summary of Invention

### Technical Problem

The present invention has been made in view of such a situation, and the object of the present invention is to provide a method for producing a sulfide solid electrolyte capable of producing a sulfide solid electrolyte having a target crystal structure and reducing the amount of energy to be input at the time of production.

### Solution to Problem

The method for producing a sulfide solid electrolyte according to the present invention is a method for producing a sulfide solid electrolyte capable of producing a sulfide solid electrolyte having a target crystal structure and reducing the amount of energy to be input at the time of production.

### Advantageous Effects of Invention

According to the present invention, it is possible to provide a method for producing a sulfide solid electrolyte that can produce a sulfide solid electrolyte having a target crystal structure and can reduce the amount of energy to be input at the time of production.

### Brief Description of Drawings

Fig. 1 is a flowchart illustrating an example of a preferred embodiment of the production method of the present embodiment.

Fig. 2 is an XRD pattern of the crystalline sulfide solid electrolyte (1) and the amorphous sulfide solid electrolyte (1)

obtained in Example 1.
Fig. 3 is an XRD pattern of the crystalline sulfide solid electrolyte (2) and the amorphous sulfide solid electrolyte (2) obtained in Example 2.
Fig. 4 is an XRD pattern of the crystalline sulfide solid electrolyte (3) and the amorphous sulfide solid electrolyte (3) obtained in Example 3.
Fig. 5 is an XRD pattern of the crystalline sulfide solid electrolyte (4) and the amorphous sulfide solid electrolyte (4) obtained in Example 4.
Fig. 6 is an XRD pattern of the crystalline sulfide solid electrolyte (C1) and the amorphous sulfide solid electrolyte (C1) obtained in Comparative Example 1.
Fig. 7 is an XRD pattern of the crystalline sulfide solid electrolyte (5) and the amorphous sulfide solid electrolyte (5) obtained in Example 5.
Fig. 8 is an XRD pattern of the crystalline sulfide solid electrolyte (6) and the amorphous sulfide solid electrolyte (6) obtained in Example 6.

## Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or plurality of other specifications considered to be preferable. It can be said to be more desirable to combine the preferred ones with each other.

### (Findings Obtained by the Inventors to Reach the Present Invention)

As a result of intensive studies to solve the above-described problems, the present inventors have found the following matters, and have completed the present invention.

In PTL 1, lithium sulfide and phosphorus sulfide are heated together with $H_2S$ to produce a sulfide solid electrolyte. $H_2S$ is used for the purpose of suppressing the desorption of sulfur atoms when the sulfide solid electrolyte is produced at a high temperature of 190°C or higher. Therefore, the purpose of use of $H_2S$ is different from the production method in which $H_2S$ is used to lower the heating temperature at the time of producing the sulfide solid electrolyte as in the invention of the present application. Further, in the production of the sulfide solid electrolyte described in PTL 1, a high temperature is required, and $H_2S$ is used for the purpose of solving the problem caused by the high temperature. Therefore, the idea of lowering the temperature at the time of production is not disclosed, which is greatly different from the present invention relating to a production method that does not require a high temperature.

In PTL 2, $H_2S$ is used to remove elemental sulfur contained in the sulfide solid electrolyte material at the time of production of the sulfide solid electrolyte, and the purpose of use is greatly different from that of the present invention. In PTL 2, heating is performed at 200°C while flowing a gas containing $H_2S$, and this is a temperature required to produce the sulfide solid electrolyte from the sulfide solid electrolyte material. Therefore, the idea of reducing this temperature is not disclosed, and is greatly different from that of the present invention relating to a production method that does not require a high temperature.

In PTL 3, $H_2S$ is used to remove a compound containing an oxygen atom such as LiOH contained in $Li_2S$, and the purpose of use of $H_2S$ is greatly different from that of the present invention. In addition, since PTL 3 includes a step of firing at 500°C under a flow of $H_2S$ gas, it is also greatly different from the present invention in terms of the heating temperature.

When the sulfide solid electrolyte is heated to a high temperature at the time of production, the produced sulfide solid electrolyte also contains a crystal structure other than the target crystal structure, and a sulfide solid electrolyte having high ionic conductivity cannot be obtained. Further, for example, in PTL 1, the raw material is heated in a state in which $H_2S$ is present, but the raw material is held at 230°C for 12 hours, and a large amount of energy is required at the time of production of the sulfide electrolyte in order to hold a high temperature state for a long time. As described above, the energy to be input at the time of production is large, which leads to an increase in production cost.

The present inventors paid attention to the heating of the raw material-containing substance, examined the relationship between the heating atmosphere and the heating temperature, and tried to heat the raw material-containing substance while bringing hydrogen sulfide into contact with the raw material-containing substance (heating (1)) and to set the temperature ($T_1$ (°C)) of the heating (1) to 170°C or lower. Then, the present inventors found that in producing the sulfide solid electrolyte, some reaction occurs by heating the raw material-containing substance, which will be described later, while bringing hydrogen sulfide into contact with the raw material-containing substance. Furthermore, the present inventors found that by setting $T_1$ to 170°C or lower, the produced sulfide solid electrolyte can have a target crystal

structure. The present inventors have come to the following production method of the present embodiment based on such knowledge. The production method of the present embodiment does not require a high temperature. As a result, it is possible to suppress the generation of an unintended crystal structure that is generated at a high temperature, and it is possible to produce a sulfide solid electrolyte having a target crystal structure. In addition, since a high temperature is not required, the amount of energy to be input at the time of production can be reduced, and thus it can be said that the production method is excellent in productivity.

Hereinafter, a method for producing a sulfide solid electrolyte according to the first aspect to the twelfth aspect of the present embodiment will be described.

The method for producing a sulfide solid electrolyte according to a first aspect of the present embodiment is a method for producing a sulfide solid electrolyte, the method including: heating a raw material-containing substance while bringing hydrogen sulfide into contact with the raw material-containing substance (heating (1)), in which a temperature ($T_1$ (°C)) of the heating (1) is 170°C or lower.

Fig. 1 is a flowchart illustrating a preferred embodiment of the method for producing a sulfide solid electrolyte of the present embodiment. The production method of the present embodiment can suppress the heating temperature by heating the raw material-containing substance while bringing the hydrogen sulfide into contact with the raw material-containing substance. In addition, the production method of the present embodiment may further include pulverization, temperature raising, and heating (2) described later as necessary.

In the present embodiment, the "raw material-containing substance" includes a solid electrolyte raw material when a sulfide solid electrolyte is produced, and means a simple substance, a compound, or a mixture thereof including a lithium atom, a phosphorus atom, and a sulfur atom. The solid electrolyte raw material may include a halogen atom as necessary.

In the present embodiment, "heating" means heating (1) described below, and may further include heating (2) as necessary.

In the present embodiment, the "temperature ($T_1$ (°C))" of the heating (1) means the highest temperature in the heating (1).

In the present embodiment, the "solid electrolyte" means an electrolyte that maintains a solid at 25°C under a nitrogen atmosphere, and the "sulfide solid electrolyte" means a solid electrolyte that contains a lithium atom, a sulfur atom, and a phosphorus atom, and if necessary, a halogen atom, and has ionic conductivity attributed to the lithium atom.

Examples of the reason why the heating temperature can be suppressed include the following hypothesis (1) and hypothesis (2), and it is considered that they act alone or in combination. In addition, it is also considered that other factors become dominant and the hypothesis (1) and/or hypothesis (2) act dependently.

According to hypothesis (1), in a case where the raw material-containing substance contains a solid electrolyte raw material such as a compound that reacts with $H_2S$, for example, lithium hydroxide (LiOH), lithium sulfide ($Li_2S$), and diphosphorus pentasulfide ($P_2S_5$, diphosphorus pentasulfide usually exists as $P_4S_{10}$), this reacts with $H_2S$ to generate a mercapto group (-SH). It is considered that one molecule of $H_2S$ is desorbed from the two mercapto groups generated and condensed (hereinafter also referred to as de-$H_2S$ condensation). A conceptual diagram is shown below.

$$LiOH \xrightarrow{H_2S} LiSH + H_2O$$

$$Li_2S \xrightarrow{H_2S} 2LiSH$$

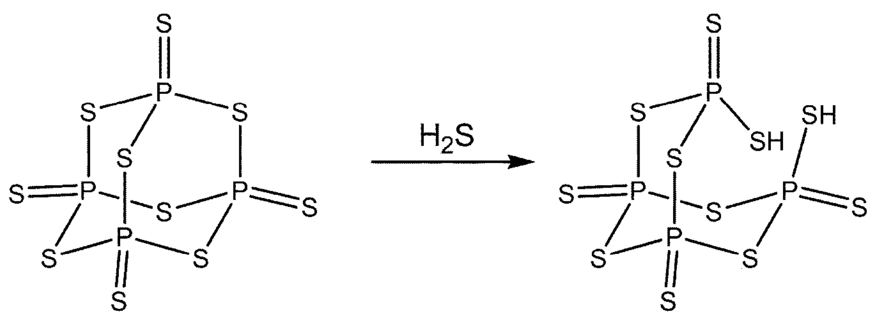

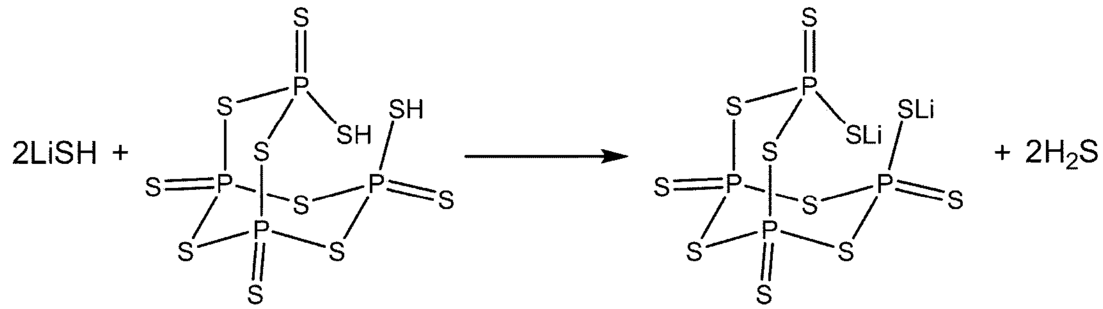

Since the reaction between compounds having a mercapto group easily proceeds, when the solid electrolyte raw material reacts with $H_2S$ and has a mercapto group, the generation of the sulfide solid electrolyte also easily proceeds as compared with the case where only the solid electrolyte raw material having no mercapto group is used. It is not necessary that all the substituents reactive with $H_2S$ of the compounds reactive with $H_2S$ contained in the solid electrolyte raw material become mercapto groups, and when even some of the substituents become mercapto groups, the activation energy for generating $Li_3PS_4$ is reduced, and thus it is considered that the heating temperature can be lowered.

In the conceptual diagram, a state in which $H_2S$ reacts with one site of P(=S)-S-P(=S) is described, but a plurality of sites may react simultaneously or at different times. It is preferable because a plurality of P(=S)-S-P(=S) react with $H_2S$ to generate a mercapto group, and the activation energy at the time of generation of $Li_3PS_4$ is reduced. In this hypothesis (1), $H_2S$ functions as a catalyst.

In hypothesis (2), LiSH is generated as in hypothesis (1). LiOH and $Li_2S$ are solid at normal temperature, and granular ones are usually used as solid electrolyte materials. The particles of LiOH and $Li_2S$ react with $H_2S$, and some of the granules become LiSH. As a result, the specific surface area thereof is increased more than that of the particles of LiOH and $Li_2S$. As the specific surface area increases, the chance of colliding with $P_2S_5$ increases. In addition, since $Li_2S$ becomes LiSH (one molecule of $Li_2S$ becomes two molecules of LiSH), the number of molecules also doubles, so that the chance of colliding with $P_2S_5$ also doubles, and it is considered that the reactivity is improved by the synergistic effect thereof.

The hydrogen sulfide used in the present embodiment may function as a solid electrolyte raw material for introducing sulfur atoms into the sulfide solid electrolyte, as in the above-described raw material-containing substance for producing the sulfide solid electrolyte, but it can be said that the main function is as a catalyst for reducing the activation energy in the production of the sulfide solid electrolyte. As described above, it is considered that the sulfide solid electrolyte can be obtained even if the heating temperature is suppressed by undergoing the generation of the intermediate having a mercapto group and the decomposition of the intermediate by de-$H_2S$ condensation (which can also be said to be the decomposition of the mercapto group).

The method for producing a sulfide solid electrolyte according to a second aspect of the present embodiment is the method for producing a sulfide solid electrolyte according to the first aspect, in which the heating (1) is performed under a stream of hydrogen sulfide.

In the present embodiment, the supply method is not particularly limited as long as the raw material-containing substance is heated in a state where hydrogen sulfide is in contact with the raw material-containing substance, but it is preferable to perform the heating in a stream of hydrogen sulfide because the supply amount of hydrogen sulfide can be easily adjusted by changing the flow rate of hydrogen sulfide or the partial pressure of hydrogen sulfide in a case where hydrogen sulfide is mixed with another gas and supplied.

The method for producing a sulfide solid electrolyte according to a third aspect of the present embodiment is the method for producing a sulfide solid electrolyte according to the second aspect, further including heating (heating (2)) after stopping the stream of hydrogen sulfide, in which a temperature ($T_2$ (°C)) of the heating (2) is 170°C or lower.

In a case where hydrogen sulfide is supplied by the stream of hydrogen sulfide as in the second aspect, the supply can be easily stopped. The heating (2) is preferably further performed because de-$H_2S$ condensation proceeds from two mercapto groups to produce a sulfide solid electrolyte.

In the present embodiment, the "temperature ($T_2$ (°C))" of the heating (2) means the highest temperature in the heating (2).

It is considered that the generation of a mercapto group mainly proceeds by the heating (1), and the de-$H_2S$ condensation mainly proceeds by the heating (2). It is considered that the method for producing a sulfide solid electrolyte of the present embodiment can lower the heating temperature required at the time of production by the generation of a mercapto group. By performing the heating (1) in this manner, the heating temperature at the time of production can be lowered, and the consumption of the raw material mixture and/or the intermediate further proceeds by the subsequent heating (2), and the yield of the sulfide solid electrolyte is improved, which is preferable. The raw material-containing substance remaining in the sulfide solid electrolyte after the production causes a decrease in the ionic conductivity of the

sulfide solid electrolyte. Since the raw material-containing substance is sufficiently consumed to improve the ionic conductivity of the sulfide solid electrolyte, the heating (2) is preferably performed. In a case where only the heating (1) is performed, the production of the sulfide solid electrolyte proceeds by allowing the generation of the intermediate having a mercapto group and the decomposition of the intermediate by the de-$H_2S$ condensation to proceed (that is, through the intermediate having a mercapto group) by the heating (1). On the other hand, in a case where the heating (1) and the heating (2) are performed, the production of the sulfide solid electrolyte proceeds by causing the generation of the intermediate having a mercapto group to proceed by the heating (1), and causing the decomposition of the intermediate by the de-$H_2S$ condensation of the intermediate to proceed by the heating (2). As described above, the sulfide solid electrolyte can be produced while suppressing the heating temperature by way of the intermediate having a mercapto group.

The method for producing a sulfide solid electrolyte according to a fourth aspect of the present embodiment is the method for producing a sulfide solid electrolyte according to the third aspect, in which the heating (2) is performed in an atmosphere of nitrogen or a rare gas or under reduced pressure.

By the heating (2), the de-$H_2S$ condensation mainly proceeds. It is preferable that the heating (2) is performed not in a hydrogen sulfide atmosphere but in an atmosphere of nitrogen or a rare gas or under reduced pressure. This is because due to decline of the partial pressure of hydrogen sulfide in the atmosphere, the desorption of $H_2S$ easily proceeds, and the equilibrium of the reaction is inclined toward the generation of the sulfide solid electrolyte.

The method for producing a sulfide solid electrolyte according to a fifth aspect of the present embodiment is the method for producing a sulfide solid electrolyte according to the third or fourth aspect, in which $T_1$ and $T_2$ satisfy a relationship of $T_1 \leq T_2 \leq 170°C$.

As described above, in the heating (1) and the heating (2), the highest temperatures of the respective heating temperatures are $T_1$ and $T_2$, and both of these are preferably 170°C or lower, and in order to obtain sulfide solid electrolytes having the target crystalline structure, both of $T_1$ and $T_2$ are preferably 170°C or lower.

$T_2$ is preferably equal to or higher than $T_1$, and $T_2$ is more preferably higher in temperature than $T_1$. This is because the heating temperature at the time of the production of the sulfide solid electrolyte can be lowered by first generating a mercapto group, increasing the content of the mercapto group as an intermediate, and then raising the temperature to perform de-$H_2S$ condensation.

The method for producing a sulfide solid electrolyte according to a sixth aspect of the present embodiment is the method for producing a sulfide solid electrolyte according to the fifth aspect, in which the temperature raising from $T_1$ to $T_2$ is performed under a stream of hydrogen sulfide.

In a case where $T_2$ is higher in temperature than $T_1$, it is preferable that the temperature raising from $T_1$ to $T_2$ is performed under a stream of hydrogen sulfide, because generation of a mercapto group further proceeds even during the temperature raising, and side reactions such as decomposition of a mercapto group during the temperature raising can be suppressed.

Further, it is preferable to raise the temperature under a stream of hydrogen sulfide because the supply amount of hydrogen sulfide can be easily adjusted.

The method for producing a sulfide solid electrolyte according to a seventh aspect of the present embodiment is the method for producing a sulfide solid electrolyte according to any one of the first to sixth aspects, in which a median diameter ($D_{50}$) of the raw material-containing substance is less than 15 $\mu$m.

This is because when the $D_{50}$ of the raw material-containing substance used in the present embodiment is less than 15 $\mu$m, the rate of the reactions that proceed by the heating (1) and the heating (2) becomes fast, and therefore the sulfide solid electrolyte can be produced at a low temperature and in a short time.

The method for producing a sulfide solid electrolyte according to an eighth aspect of the present embodiment is the method for producing a sulfide solid electrolyte according to any one of the first to seventh aspects, further including pulverization.

Although the details of the pulverization will be described later, it is preferable that the method for producing a sulfide solid electrolyte of the present embodiment further includes at least one of pulverization of the raw material-containing substance (solid electrolyte raw material), pulverization of an intermediate which will be described later, or pulverization after heating (2). This is because the reaction rate of the heating (1) and/or the heating (2) is increased by including pulverization of the raw material-containing substance (solid electrolyte raw material) and/or pulverization of an intermediate which will be described later, and the raw material-containing substance is brought into contact with $H_2S$ more easily by additionally pulverization of the raw material-containing substance, so that the reactivity is improved and the unreacted raw material-containing substance is reduced. When the content of the unreacted raw material is reduced, the ionic conductivity of the sulfide solid electrolyte is improved. In addition, when the solid electrolyte raw materials and/or intermediates, particularly lithium halide and $Li_3PS_4$, are heated, they are easily uniformly dispersed, and halogen atoms are more uniformly distributed in the sulfide solid electrolyte to be produced, so that the ionic conductivity is improved. Therefore, the battery characteristics of a lithium ion battery using the sulfide solid electrolyte are excellent.

The method for producing a sulfide solid electrolyte according to a ninth aspect of the present embodiment is the method for producing a sulfide solid electrolyte according to any one of the first to eighth aspects, in which the heating (1) is

performed by being divided into at least two times, and the method for producing a sulfide solid electrolyte according to a tenth aspect of the present embodiment is the method for producing a sulfide solid electrolyte according to the eighth or ninth aspect, in which the heating (1) is performed by being divided into at least two times, and the heating in the heating (1), the pulverization, and the heating in the heating (1) are performed in this order.

By performing the heating (1) by being divided into at least two times, the generation of the intermediate can be further advanced, and thus the ionic conductivity of the sulfide solid electrolyte to be obtained can be improved. In addition, by adopting a combination of performing the heating (1) by being divided into at least two times and pulverization, the miscibility of the intermediate is further improved, and thus the heating by the heating (1) or the heating (2) which is preferably adopted can be performed more efficiently. Therefore, the sulfide solid electrolyte having a desired crystal structure can be easily produced while further reducing the amount of energy, and the ionic conductivity of the sulfide solid electrolyte to be obtained can be further improved.

The method for producing a sulfide solid electrolyte according to an eleventh aspect of the present embodiment is the method for producing a sulfide solid electrolyte according to any one of the eighth to tenth aspects, in which the pulverization includes pulverization of the raw material-containing substance.

This is because by pulverization of the raw material-containing substance used in the present embodiment, the reaction rates of the heating (1) and the heating (2) are increased as described above, and the ionic conductivity of the sulfide solid electrolyte is also improved.

The method for producing a sulfide solid electrolyte according to a twelfth aspect of the present embodiment is the method for producing a sulfide solid electrolyte according to any one of the first to eleventh aspects, in which the raw material-containing substance is a mixture of solid electrolyte raw materials containing at least one selected from a lithium atom, a sulfur atom, and a phosphorus atom.

This is because when the raw material-containing substance used in the present embodiment is a mixture of solid electrolyte raw materials containing at least one selected from a lithium atom, a sulfur atom, and a phosphorus atom, it becomes easy to produce a sulfide solid electrolyte having a target crystal structure, and it becomes easy to produce a sulfide solid electrolyte having a crystal system with high ionic conductivity.

Hereinafter, the method for producing a sulfide solid electrolyte of the present embodiment will be described in more detail according to the above-mentioned embodiments.

[Method for Producing Sulfide Solid Electrolyte]

The method for producing a sulfide solid electrolyte of the present embodiment is a method for producing a sulfide solid electrolyte, the method including: heating a raw material-containing substance while bringing hydrogen sulfide into contact with the raw material-containing substance (heating (1)), in which a temperature ($T_1$ (°C)) of the heating (1) is 170°C or lower.

Hereinafter, after the production method is described, details of the raw material-containing substance, the sulfide solid electrolyte, and the like will be described.

<While bringing hydrogen sulfide into contact with>

The method for producing a sulfide solid electrolyte of the present embodiment needs to include heating, which will be described later, a raw material-containing substance, which will be described later, while bringing hydrogen sulfide into contact with the raw material-containing substance. When the solid electrolyte raw material contained in the raw material-containing substance is brought into contact with hydrogen sulfide and heated, as described above, the solid electrolyte raw material contained in the raw material-containing substance becomes an intermediate having a mercapto group in the structure thereof. When the intermediate is generated, the activation energy of the production of the sulfide solid electrolyte is lowered, and heating at a high temperature is not required for the production, which is preferable.

As a method for lowering the heating temperature at the time of production, a method using a complexing agent is known (for example, WO 2020/105737 A). This method produces a solid electrolyte via a complex by treating a raw material-containing substance together with a complexing agent, and can be said to be an excellent production method because heating at a high temperature is also not required and production can be performed in a short time using a simple production apparatus. On the other hand, since it is necessary to remove the complexing agent from the complex, a step of removing the complexing agent from the complex is required. In contrast, in the method for producing a sulfide solid electrolyte of the present embodiment, it is not necessary to use a complexing agent, and thus the step of removing the complexing agent is not required. The method for producing a sulfide solid electrolyte of the present embodiment can be said to be an excellent production method in that hydrogen sulfide is a gas at normal temperature and thus can be easily removed.

The method for bringing hydrogen sulfide into contact with the raw material-containing substance is not particularly limited, and the atmosphere during heating is preferably an atmosphere containing hydrogen sulfide or a

hydrogen sulfide atmosphere. As will be described later, it is also preferable to heat the raw material-containing substance together with a solvent in which hydrogen sulfide is dissolved.

In the heating (1) and the temperature raising described later, hydrogen sulfide reacts with the raw material-containing substance, and hydrogen sulfide is consumed with time. Therefore, it is preferable to add hydrogen sulfide as appropriate. For this reason, the heating (1) and the temperature raising may be performed in a batch manner in which hydrogen sulfide is introduced into a closed device and hydrogen sulfide is added each time the internal pressure decreases. However, it is preferable that the heating (1) in which the consumption of hydrogen sulfide is large is performed under a stream of hydrogen sulfide.

Here, the reason why the heating is performed while bringing hydrogen sulfide into contact with the raw material-containing substance is to avoid that the hydrogen sulfide is consumed, the amount of hydrogen sulfide in contact with the raw material-containing substance is reduced, and the heating is performed in a state in which the raw material-containing substance is not in contact with the hydrogen sulfide. This is because it is assumed that, if heating is performed in a state in which hydrogen sulfide is not in contact, desorption of hydrogen sulfide from the intermediate proceeds, and a sufficient amount of the mercapto group is not present in the intermediate. Therefore, it is preferable that a sufficient amount of hydrogen sulfide can be supplied under a stream of hydrogen sulfide until heating (2) described later. In the case of pulverization of the intermediate, it is preferable to keep the intermediate under a stream of hydrogen sulfide until the intermediate is cooled to near room temperature (the definition of "room temperature" will be described later).

In the present disclosure, "stream" means that hydrogen sulfide is supplied from the outside of the heating device and then discharged to the outside of the device, and it is preferable that the discharged hydrogen sulfide is supplied again so as to be circulated. In addition, in order to prevent the discharged hydrogen sulfide from being discharged into the environment, it is also preferable to provide a hydrogen sulfide collector as necessary.

The flow rate of the stream can be appropriately selected according to the size of the reaction device, the amount of the raw material-containing substance to be used, the amount of the solvent to be used, and the like, and is preferably adjusted so that the generation of the intermediate has priority over the decomposition of the intermediate in the heating (1) and the temperature raising. The flow rate is not particularly limited, and is preferably 0.1 mL/min or more and 500 mL/min or less, and more preferably 0.3 mL/min or more and 400 mL/min or less with respect to 1 g of the raw material-containing substance.

<Heating>

The method for producing a sulfide solid electrolyte of the present embodiment is required to include heating.

The heating needs to include heating (1) the raw material-containing substance while bringing hydrogen sulfide into contact with the raw material-containing substance, and preferably further includes heating (heating (2)) after the stream of hydrogen sulfide is stopped.

Hereinafter, the heating (1) and the heating (2) will be described in more detail.

(Heating (1))

The heating (1) includes heating a raw material-containing substance while bringing hydrogen sulfide into contact with the raw material-containing substance, and the temperature ($T_1$ (°C)) of the heating (1) is required to be 170°C or lower. The heating (1) may be performed once at a heating temperature of 170°C or lower while bringing hydrogen sulfide into contact with the raw material-containing substance, or may be performed by being divided into at least two times. When the heating (1) is performed by being divided into at least two times, the heating may be performed by being divided into at least two times at a single heating temperature, or may be performed at two or more heating temperatures. From the viewpoint of further advancing the generation of the intermediate to improve the ionic conductivity of the sulfide solid electrolyte to be obtained, the heating (1) is preferably performed by being divided into at least two times. As a result, it is also possible to more efficiently and easily produce a sulfide solid electrolyte having a desired crystal structure while reducing the amount of energy.

During the heating (1), it is not necessary to be always $T_1$ (°C), and heating is usually started from room temperature (in the description herein, room temperature means a temperature at which heating or cooling is not performed from the outside, and is usually a temperature near 25°C), and is controlled so as to be a temperature lower than $T_1$ (°C).

The heating method is not particularly limited, and can be appropriately selected according to the size and shape of the reaction device and the heating temperature. For example, the heating method may be appropriately selected from means such as a hot water bath, an oil bath, a mantle heater, and a heating jacket.

(Temperature ($T_1$ (°C)) of Heating (1))

As described above, the heating (1) is heating for producing an intermediate, and when $T_1$ (°C) is higher than 170°C, decomposition of the formed mercapto group takes precedence over formation of a mercapto group. In order to sufficiently generate a mercapto group and obtain more intermediates, $T_1$ (°C) is required to be 170°C or lower. $T_1$ (°C) is preferably 150°C or lower, more preferably 120°C or lower, and particularly in order to promote the consumption of the raw material-containing substance, still more preferably 100°C or lower. On the other hand, in order to improve the reaction rate of the formation of a mercapto group, the temperature is preferably room temperature or higher, more preferably 30°C or higher, still more preferably 35°C or higher, and yet still more preferably 40°C or higher. The combination of the upper limit value and the lower limit value is preferably room temperature or higher and 170°C or lower, more preferably 30°C or higher and 150°C or lower, still more preferably 35°C or higher and 120°C or lower, and yet still more preferably 40°C or higher and 100°C or lower.

In the present disclosure, the temperature of heating ($T_1$ (°C) and $T_2$ (°C)) means a temperature of an object to be heated. The temperature of the object to be heated may be regarded as a temperature of a solvent in a case where the solvent is used, a temperature measured by bringing a thermocouple or the like into contact with a powder in a case where the powder is heated, and a temperature of an oil bath or the like in a case where a reactor is heated by the oil bath or the like.

In a case where the heating (1) is performed by being divided into at least two times, the first heating temperature $T_{1A}$ (°C) (hereinafter, the first heating temperature in a case where the heating (1) is performed by being divided into at least two times may be referred to as "$T_{1A}$". "$T_{1a}$" is a temperature included in the heating temperature "$T_1$" of the heating (1), and the matters applied to "$T_1$" also apply to "$T_{1A}$") is preferably room temperature or higher, more preferably 30°C or higher, still more preferably 40°C or higher, and yet still more preferably 45°C or higher, and the upper limit is preferably 80°C or lower, more preferably 70°C or lower, still more preferably 60°C or lower, and yet still more preferably 55°C or lower.

The heating temperature of the second and subsequent heating may be the same as the heating temperature $T_{1A}$ (°C) of the first heating, may be higher than the heating temperature $T_{1A}$ (°C), and is preferably equal to or higher than the heating temperature $T_{1A}$ (°C). The specific temperature range is, for example, preferably higher than 80°C, more preferably 85°C or higher, still more preferably 90°C or higher, and yet still more preferably 95°C or higher, and the upper limit is preferably lower than 110°C, more preferably 108°C or lower, and still more preferably 105°C or lower. In a case where the heating (1) is performed by being divided into two times, the second heating temperature $T_{1B}$ (°C) (hereinafter, the second heating temperature in a case where the heating (1) is performed by being divided into at least two times may be referred to as "$T_{1B}$". Similarly to the above "$T_{1A}$", "$T_{1B}$" is also a temperature included in the heating temperature "$T_1$" of the heating (1), and the matters applied to "$T_1$" are also applied to "$T_{1B}$".) may be selected from the above temperature range. In addition, in a case where the heating is performed by dividing the heating into three or more times, a plurality of heating temperatures may be selected from the above temperature range, the heating temperature may be selected so as to increase in order, the heating temperature may be selected so as to decrease, and it is preferable that the heating temperature is selected so as to increase in order.

When the heating (1) is performed by being divided into at least two times, the heating (1) may be performed by being divided into at least two times before pulverization described later, the heating (1) may be performed with the pulverization described later interposed therebetween, or the heating (1) may be performed by being divided into at least two times after the pulverization described later. Among these, it is preferable that the heating (1) is performed with the pulverization described later interposed therebetween, that is, the heating of the heating (1), the pulverization, and the heating of the heating (1) are performed in this order. In this case, for example, the heating (1) can be performed once or a plurality of times before the pulverization, and the heating (1) can be performed once or a plurality of times after the pulverization. It is preferable that the first heating of the heating (1) before the pulverization, the pulverization, and the second and subsequent heating of the heating (1) are performed in this order, and it is more preferable that the first heating of the heating (1) before the pulverization, the pulverization, and the second heating of the heating (1) are performed in this order. In this way, by adopting the heating (1) and the pulverization in combination, the heating can be performed more efficiently. Therefore, not only is it easy to produce a sulfide solid electrolyte having a desired crystal structure while further reducing the amount of energy, but also the mixing property of the intermediate is further improved, so that the ionic conductivity of the sulfide solid electrolyte to be obtained can be further improved.

After the second or subsequent heating of the heating (1), further heating (2) can also be performed. When the heating (1) is performed with pulverization interposed therebetween, and the heating (2) is further performed, it is particularly effective in terms of improving the ionic conductivity of the sulfide solid electrolyte to be obtained.

In a case where the heating (1) is performed with the pulverization interposed therebetween, the first heating temperature $T_{1A}$ (°C) may be appropriately selected from a preferable temperature range of the heating temperature $T_{1A}$ (°C). The heating temperature of the second and subsequent heating may be appropriately selected from a preferable temperature range of the first heating temperature $T_{1A}$ (°C), and the second heating temperature $T_{1B}$ (°C) is preferably set to the same temperature as the heating temperature $T_{1A}$ (°C).

In addition, in a case where the heating (1) is performed three or more times, the heating temperature of the third and subsequent heating may be appropriately selected from the preferable temperature range of the heating temperature of the second and subsequent heating. Similarly to the heating temperatures $T_{1A}$ and $T_{1B}$ of the first and second times, the heating temperature of the third and subsequent times is also a temperature included in the heating temperature "$T_1$" of the heating (1), and the matters applied to the "$T_1$" are also applied to the heating temperature of the third and subsequent times.

(Heating (2))

The method for producing a sulfide solid electrolyte of the present embodiment preferably includes further heating (heating (2)) after stopping the stream of hydrogen sulfide, in which a temperature ($T_2$ (°C)) of the heating (2) is 170°C or lower.

This is because by performing the heating (2), desorption of $H_2S$ from the intermediate occurs as described above, and the de-$H_2S$ condensation further proceeds.

(Temperature ($T_2$ (°C)) of Heating (2))

The temperature $T_2$ (°C) is preferably 170°C or lower, more preferably 160°C or lower, still more preferably 150°C or lower, yet still more preferably 140°C or lower, and particularly preferably 135°C or lower. On the other hand, in order to shorten the heating time, the temperature is preferably 50°C or higher, more preferably 70°C or higher, still more preferably 80°C or higher, yet still more preferably 90°C or higher, and particularly preferably 100°C or higher. The combination of the upper limit value and the lower limit value is preferably 50°C or higher and 170°C or lower, more preferably 70°C or higher and 160°C or lower, still more preferably 80°C or higher and 150°C or lower, yet still more preferably 90°C or higher and 140°C or lower, and particularly preferably 100°C or higher and 135°C or lower.

As described above, the de-$H_2S$ condensation proceeds preferentially at a higher temperature than the generation of a mercapto group and the decomposition of a mercapto group. In addition, $T_1$ and $T_2$ are preferably 170°C or lower in order to obtain a target crystal structure. Therefore, it is preferable that $T_1$ and $T_2$ satisfy a relationship of $T_1 \leq T_2 \leq 170°C$. In the description herein, "decomposition of a mercapto group" means returning to a state before generation of a mercapto group, and the like.

$T_1$ and $T_2$ may be equal to each other or may satisfy $T_1 < T_2$, and it is preferable that $T_1 < T_2$ is satisfied.

In a case where the heating (1) is performed once, the temperature difference between $T_2$ and $T_1$ ($T_2 - T_1$) may be 0°C, but is preferably 10°C or higher and 150°C or lower, more preferably 20°C or higher and 130°C or lower, still more preferably 30°C or higher and 110°C or lower, yet still more preferably 40°C or higher and 100°C or lower, and excellently preferably 50°C or higher and 90°C or lower.

When the heating (1) is performed by being divided into at least two times, the first heating temperature $T_{1A}$ is preferably selected from the temperature range of the temperature difference ($T_2 - T_1$) between $T_2$ and $T_1$. In addition, in a case where the heating (1) is performed by being divided into two times, the second heating temperature $T_{1B}$ is preferably equal to or higher than the first heating temperature $T_{1A}$ as described above, and more preferably higher than $T_{1A}$. Further, based on the relationship between the heating temperature of the heating (1) and the heating temperature of the heating (2), the second heating temperature $T_{1B}$ is preferably equal to or lower than the heating temperature $T_2$ of the heating (2) ($T_{1B} \leq T_2$) and more preferably lower than $T_2$ ($T_{1B} < T_2$). In addition, in a case where the heating (1) is performed by dividing the heating (1) into three or more times, the third and subsequent heating temperatures ($T_{1C}$) are preferably equal to or higher than the first heating temperature ($T_{1A}$) and the second heating temperature ($T_{1B}$), and the upper limit thereof is preferably equal to or lower than the heating temperature $T_2$ of the heating (2) ($T_{1C} \leq T_2$) and more preferably lower than $T_2$ ($T_{1C} < T_2$).

When the heating (1) is performed by being divided into at least two times, the temperature difference ($T_2 - T_1$) between the heating temperature Ti of the heating (1) (which is the highest heating temperature in the heating (1), and is preferably $T_{1B}$ or $T_{1C}$) and the heating temperature $T_2$ of the heating (2) is preferably 3°C or higher and 30°C or lower, more preferably 5°C or higher and 15°C or lower, and still more preferably 7.5°C or higher and 12.5°C or lower.

The heating (2) is preferably performed after stopping the stream of hydrogen sulfide. This is because the progress of the de-$H_2S$ condensation is promoted as described above. It is preferable that the heating (2) is performed in an atmosphere of nitrogen or a rare gas, or under reduced pressure, since the progress of the de-$H_2S$ condensation is further promoted, and it is more preferable that the heating (2) is performed in a nitrogen atmosphere including a nitrogen stream from the viewpoint of ease of implementation and the like.

<Temperature Raising>

As described above, it is preferable that $T_1 < T_2$. In this case, the temperature raising from $T_1$ to $T_2$ may be

performed as it is, may be performed after the temperature is once cooled to the room temperature from $T_1$, or may be performed after the temperature is raised from $T_1$ to $T_2$ or higher and then cooled to $T_2$. Even when the temperature is raised to $T_2$ or higher, it is preferable that the temperature is not 170°C or higher. Further, when the temperature is raised from $T_1$ to $T_2$, it is preferable that the temperature is raised under a stream of hydrogen sulfide, and the stream of hydrogen sulfide may be carried out under the same conditions as those for the stream of hydrogen sulfide preferably carried out during the heating (1).

The temperature raising rate can be appropriately selected depending on the shape and size of the apparatus used in the present embodiment, the heating method, the amount of the raw material-containing substance used, $T_1$, $T_2$, and the like. The temperature raising rate is preferably 0.01°C/min or more and 100°C/min or less, and more preferably 0.1°C/min or more and 50°C/min or less.

The temperature raising rate can be calculated from the temperature difference between $T_2$ and $T_1$ (room temperature in case of once cooling to room temperature ) at the time of temperature rise and the time (t (min)) required from the heating (1) to the heating (2), i.e., $((T_2 - T_1)/t)$.

It is preferable to raise the temperature from the $T_1$°C to the $T_2$°C in a stream of hydrogen sulfide because decomposition of the mercapto group of the intermediate is suppressed.

In addition, as described above, in a case where the heating (1) is performed by being divided into at least two times, and in a case where the heating temperature $T_{1B}$ of the second heating is higher than the heating temperature $T_{1A}$ of the first heating, and the heating temperature $T_{1C}$ of the third and subsequent heating treatments is higher, the temperature raising is performed. The temperature raising in this case is also preferably performed under a stream of hydrogen sulfide, as in the temperature raising from $T_1$ to $T_2$. Further, the temperature raising rate is also similar to the temperature raising from $T_1$ to $T_2$.

<Pulverization>

The method for producing a sulfide solid electrolyte of the present embodiment preferably further includes pulverization.

The pulverization preferably further includes at least one of pulverization of the raw material-containing substance (solid electrolyte raw material), pulverization of an intermediate which will be described later, or pulverization after the heating (2). Examples of the pulverization target include a solid electrolyte raw material and a sulfide solid electrolyte when only the heating (1) is performed, and a solid electrolyte raw material, an intermediate, and a sulfide solid electrolyte when the heating (1) and the heating (2) are performed. By including pulverization of the raw material-containing substance (solid electrolyte raw material) and/or pulverization of an intermediate which will be described later, the reaction rate of the heating (1) and/or the heating (2) is increased, and by including additionally pulverization of the raw material-containing substance, the raw material-containing substance is in a state of being more easily brought into contact with $H_2S$, so that the reactivity is improved and the unreacted raw material-containing product is reduced, which is preferable. From such a viewpoint, it is preferable to pulverize the solid electrolyte raw material. In addition, in particular, when the intermediate is pulverized, particles having portions that have not been in direct contact with hydrogen sulfide as surfaces are obtained, and contact of hydrogen sulfide with those portions occurs. As a result, generation of a mercapto group further proceeds, and when the content of unreacted raw materials is reduced, the ionic conductivity of the sulfide solid electrolyte is improved, which is preferable.

When the solid electrolyte raw materials and/or intermediates, particularly lithium halide and $Li_3PS_4$, are heated, they are easily uniformly dispersed, and halogen atoms are more uniformly distributed in the sulfide solid electrolyte to be produced, so that the ionic conductivity is improved. Therefore, the battery characteristics of a lithium ion battery using the sulfide solid electrolyte are excellent, which are preferable. In order to reduce the content of the raw material-containing substance remaining in the sulfide solid electrolyte, to improve the reaction rate, and to shorten the production time of the sulfide solid electrolyte, the pulverization is preferably pulverization of the raw material-containing substance.

In the case of pulverization of the intermediate, the pulverization can be performed before the temperature raising, after the temperature raising, or during the temperature raising, and it is preferable that after the heating (1), the intermediate is cooled to near room temperature, pulverized in a hydrogen sulfide, nitrogen, or rare gas atmosphere, and then heated by raising the temperature to perform the heating (2). In addition, in a case where the heating (1) is performed by being divided into at least two times, and in a case where the heating of the heating (1) is followed by cooling the intermediate to near room temperature and the intermediate is pulverized in a hydrogen sulfide, nitrogen, or rare gas atmosphere, it is also preferable that the heating of the heating (1) is then performed by raising the temperature, and it is also preferable that the heating (2) is performed after the heating of the heating (1) is performed by raising the temperature. By performing the heating (1) and/or the heating (2) after performing heating of the heating (1) and pulverization, it becomes easy to produce a sulfide solid electrolyte having a desired crystal structure while further reducing the amount of energy, and it also becomes possible to further improve the ionic conductivity of the obtained sulfide solid electrolyte. The heating temperatures in the heating (1) and the heating (2) in this case are as described above.

In a case where the heating (1) is performed by being divided into at least two times and pulverization is performed between a plurality of times of heating in the heating (1), as described above, it is preferable to perform cooling to near room temperature before pulverization, and the cooling is preferably performed under a stream of hydrogen sulfide in the same manner as the above-described temperature raising. The temperature dropping rate at the time of cooling to room temperature may be selected as a temperature dropping rate from the numerical range described as the temperature raising rate.

By the pulverization, the median diameter ($D_{50}$) of the object to be pulverized (the solid electrolyte raw material, the intermediate, and the sulfide solid electrolyte) is preferably less than 15 μm, more preferably 12 μm or less, and still more preferably 10 μm or less.

The median diameter ($D_{50}$) can be measured, for example, by the method described in Examples.

The pulverization method is not particularly limited as long as the powders of the raw material-containing substance (solid electrolyte raw material), the intermediate, and the sulfide solid electrolyte can be pulverized, and may be a method usually performed in the production of a sulfide solid electrolyte.

By adjusting the circumferential speed of a rotating body of a pulverizer, it is possible to adjust the crushing (atomization) and granulation (grain growth) of the powder. That is, in addition to mixing, since the median diameter can be reduced by crushing and the median diameter can be increased by granulation, the morphology of the powder can be easily adjusted at will.

As a more specific apparatus as the pulverizer, for example, a media type pulverizer can be mentioned. The media type pulverizer is roughly classified into a container driving-type pulverizer and a media agitating-type pulverizer. In a case where the powder is a slurry containing a solvent, among the media type pulverizers, a wet pulverizer capable of wet pulverization is preferable.

Examples of the container driving-type pulverizer include a ball mill and a bead mill equipped with a stirring tank, a pulverization tank, or a combination thereof. As the ball mill and the bead mill, any of various types such as a rotary type, a rolling type, a vibration type, and a planetary type can be adopted.

Examples of the media agitating-type pulverizer include various pulverizers such as impact type pulverizers such as a cutter mill, a hammer mill, and a pin mill; tower type pulverizers such as a tower mill; stirring tank type pulverizers such as an attritor, an aquamizer, and a sand grinder; circulation tank type pulverizers such as a viscomill and a pearl mill; circulation tube type pulverizers; annular type pulverizers such as CoBall Mill; and continuous dynamic type pulverizers.

In the mechanical treatment of the powder, when the powder is used as a slurry, from the viewpoint of more easily adjusting a desired morphology, a container driving-type pulverizer is preferable, and among them, a bead mill and a ball mill are preferable. A container driving-type pulverizer such as a bead mill or a ball mill includes, as a rotating body capable of stirring a powder, a container such as a stirring tank or a pulverization tank for storing the powder. Therefore, as described above, the morphology of the powder can be easily adjusted by adjusting the circumferential speed of the rotating body.

In the bead mill and the ball mill, the morphology can be adjusted also by adjusting the particle size, the material, the use amount, and the like of beads, balls, and the like to be used, and therefore, finer adjustment of the morphology becomes possible, and a nonconventional morphology can also be adjusted. For example, as the bead mill, it is possible to use a type (for example, Ultra Apex Mill (UAM) or the like) which is a centrifugal separation type and in which so-called micro beads having an extremely fine particle size (about φ 0.015 to 1 mm) can be used.

The particle diameter of the media used in bead mills, ball mills, and the like may be appropriately determined in consideration of the type, scale, and the like of the apparatus to be used together with the desired morphology, and is usually preferably 0.01 mm or more, more preferably 0.015 mm or more, still more preferably 0.02 mm or more, and yet still more preferably 0.04 mm or more, and the upper limit is preferably 10 mm or less, and more preferably 5 mm or less.

Examples of the material of the media include metals such as stainless steel, chromium steel, and tungsten carbide; ceramics such as zirconia and silicon nitride; and minerals such as agate.

The treatment time of the mechanical treatment and the circumferential speed of the rotating body in the mechanical treatment (rotation speed in an apparatus such as a bead mill or a ball mill) may be appropriately determined in consideration of the type, scale, and the like of the apparatus to be used together with the desired morphology.

<Raw Material-Containing Substance>

The raw material-containing substance used in the present embodiment is preferably a substance containing a lithium atom, a sulfur atom, and a phosphorus atom, and more preferably a mixture of solid electrolyte raw materials containing at least one selected from a lithium atom, a sulfur atom, and a phosphorus atom. More specifically, the raw material-containing substance is a substance containing a substance containing one or more selected from the group consisting of these atoms (hereinafter also referred to as a "solid electrolyte raw material"). The raw material-containing substance used in the present embodiment is preferably contains two or more kinds of solid electrolyte raw materials.

Furthermore, in the heating (1), in order to form a mercapto group with hydrogen sulfide, the raw material-containing substance preferably contains at least one compound that reacts with $H_2S$ as described above as the solid electrolyte raw material.

In addition, the raw material-containing substance used in the present embodiment preferably further contains a halogen atom from the viewpoint of improving the ionic conductivity.

Examples of the solid electrolyte raw material contained in the raw material-containing substance includes, a raw material containing of at least two kinds of atoms selected from the above four kinds of atoms, such as lithium sulfides; lithium halides such as lithium fluoride, lithium chloride, lithium bromide, and lithium iodide ; phosphorus sulfides such as diphosphorus trisulfide ($P_2S_3$) and diphosphorus pentasulfide ($P_2S_5$); phosphorus halides such as various phosphorus fluorides ($PF_3$ and $PF_5$), various phosphorus chlorides ($PCl_3$, $PCl_5$, and $P_2Cl_4$), various phosphorus bromides ($PBr_3$ and $PBr_5$), and various phosphorus iodides ($PI_3$ and $P_2I_4$); and thiophosphoryl halides such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$).

Examples that can be used as solid electrolyte raw materials other than the above include a solid electrolyte raw material containing at least one atom selected from the above four kinds of atoms and containing an atom other than the four kinds of atoms, more specifically, lithium compounds such as lithium oxide, lithium hydroxide, and lithium carbonate; alkali metal sulfides such as sodium sulfide, potassium sulfide, rubidium sulfide, and cesium sulfide; metal sulfides such as silicon sulfide, germanium sulfide, boron sulfide, gallium sulfide, tin sulfide (SnS, $SnS_2$), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

Among the above examples, as the solid electrolyte raw material containing a lithium atom, a sulfur atom, and a phosphorus atom, lithium sulfide; and phosphorus sulfides such as diphosphorus trisulfide ($P_2S_3$) and diphosphorus pentasulfide ($P_2S_5$) are preferable, and among phosphorus sulfides, diphosphorus pentasulfide is preferable.

Furthermore, when introducing an oxygen atom into the solid electrolyte, phosphoric acid compounds such as lithium oxide, lithium hydroxide, and lithium phosphate are preferable.

As the halogen atom, a fluorine atom, a chlorine atom, a bromine atom, or an iodine atom is preferable, and a chlorine atom, a bromine atom, or an iodine atom is more preferable. Examples of the solid electrolyte raw materials include those containing these halogen atoms. As the halogen atom, these halogen atoms may be used singly or a plurality of kinds thereof may be used in combination, and it is preferable that a plurality of kinds thereof are used in combination.

Preferable examples of the solid electrolyte raw material containing a halogen atom include halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide. As the halogen simple substance, chlorine ($Cl_2$), bromine ($Br_2$) and iodine ($I_2$) are more preferable, and as the lithium halide, lithium chloride, lithium bromide and lithium iodide are more preferable.

Preferable examples of the combination of the solid electrolyte raw materials include a combination of lithium sulfide and diphosphorus pentasulfide, a combination of lithium sulfide, diphosphorus pentasulfide, and a halogen simple substance, and a combination of lithium sulfide, diphosphorus pentasulfide, and lithium halide. Chlorine, bromine, and iodine are preferable as the halogen simple substance, and lithium chloride, lithium bromide, and lithium iodide are preferable as the lithium halide.

In the present embodiment, $Li_3PS_4$ containing a $PS_4$ structure can also be used as part of the raw material. Specifically, $Li_3PS_4$ is produced and prepared in advance, and is used as a raw material.

The content of $Li_3PS_4$ with respect to the total raw materials is preferably 60 to 100 mol%, more preferably 65 to 90 mol%, and still more preferably 70 to 80 mol%.

Further, when using $Li_3PS_4$ and a halogen simple substance, the content of the halogen simple substance with respect to $Li_3PS_4$ is preferably 1 to 50 mol%, more preferably 10 to 40 mol%, still more preferably 20 to 30 mol%, and yet still more preferably 22 to 28 mol%.

The lithium sulfide used in the present embodiment is preferably particles.

The median diameter ($D_{50}$) of the lithium sulfide particles is preferably 0.1 $\mu$m or more and less than 15 $\mu$m, more preferably 0.5 $\mu$m or more and 13 $\mu$m or less, still more preferably 1 $\mu$m or more and 12 $\mu$m or less, yet still more preferably 1 $\mu$m or more and 10 $\mu$m or less, more excellently preferably 1 $\mu$m or more and 5 $\mu$m or less, and still more excellently preferably 1 $\mu$m or more and 3 $\mu$m or less. In the description herein, the median diameter ($D_{50}$) is a particle diameter which reaches 50% (volume-based) of the whole by sequentially integrating particles from the smallest particle diameter when a particle size distribution integration curve is drawn, and the volume distribution is an average particle diameter which can be measured using, for example, a laser diffraction/scattering type particle size distribution measuring device. Among the solid electrolyte raw materials exemplified above, solid raw materials preferably have an average particle diameter similar

to that of the lithium sulfide particles, i.e., the median diameter ($D_{50}$) of the raw material-containing substance is preferably less than 15 μm, more preferably 13 μm or less, still more preferably 12 μm or less, yet still more preferably 10 μm or less, more excellently preferably 5 μm or less, and still more excellently preferably 3 μm or less. As a combination of the upper limit value and the lower limit value, it is preferably 0.1 μm or more and less than 15 μm, more preferably 0.5 μm or more and 13 μm or less, still more preferably 1 μm or more and 12 μm or less, yet still more preferably 1 μm or more and 10 μm or less, more excellently preferably 1 μm or more and 5 μm or less, and still more excellently preferably 1 μm or more and 3 μm or less. In the production method of the present embodiment, as the raw material-containing substance (solid electrolyte raw material contained therein), a substance having the above-described median diameter from the beginning may be used, or a substance having the above-described median diameter by pulverization as described above may be used.

When lithium sulfide, diphosphorus pentasulfide, and a lithium halide are used as the solid electrolyte raw material, from the viewpoint of obtaining higher chemical stability and obtaining higher ionic conductivity, the proportion of lithium sulfide with respect to the total of lithium sulfide and diphosphorus pentasulfide is preferably 60 mol% or more, more preferably 65 mol% or more, still more preferably 70 mol% or more, and yet still more preferably 74 mol% or more, and the upper limit thereof is preferably 85 mol% or less, more preferably 83 mol% or less, and still more preferably 80 mol% or less.

In the case of using lithium sulfide, diphosphorus pentasulfide, a lithium halide and other solid electrolyte raw materials used as necessary, the content of lithium sulfide and diphosphorus pentasulfide with respect to the total of these is preferably 50 mol% or more, more preferably 55 mol% or more, and still more preferably 60 mol% or more, and the upper limit thereof is preferably 100 mol% or less, more preferably 90 mol% or less, still more preferably 85 mol% or less, and yet still more preferably 80 mol% or less.

When lithium bromide and lithium iodide are used in combination as the lithium halide, from the viewpoint of improving the ionic conductivity, the proportion of lithium bromide with respect to the total of lithium bromide and lithium iodide is preferably 1 mol% or more, more preferably 20 mol% or more, still more preferably 35 mol% or more, and yet still more preferably 45 mol% or more, and the upper limit thereof is preferably 99 mol% or less, more preferably 90 mol% or less, still more preferably 75 mol% or less, and yet still more preferably 60 mol% or less.

In addition, when lithium bromide and lithium chloride are used in combination as the lithium halide, from the viewpoint of improving the ionic conductivity, the proportion of lithium bromide with respect to the total of lithium bromide and lithium chloride is preferably 1 mol% or more, more preferably 15 mol% or more, still more preferably 25 mol% or more, and yet still more preferably 35 mol% or more, and the upper limit thereof is preferably 99 mol% or less, more preferably 75 mol% or less, still more preferably 60 mol% or less, and yet still more preferably 45 mol% or less.

When using a halogen simple substance as the raw material, and when using lithium sulfide and diphosphorus pentasulfide, relative to the total number of moles of lithium sulfide and diphosphorus pentasulfide excluding lithium sulfide having the same number of moles as the number of moles of the halogen simple substance, the ratio of the number of moles of lithium sulfide excluding lithium sulfide having the same number of moles as the number of moles of the halogen simple substance preferably falls within a range of 60 to 90%, more preferably falls within a range of 65 to 85%, further preferably falls within a range of 68 to 82%, still more preferably falls within a range of 72 to 78%, particularly preferably falls within a range of 73 to 77%. This is because higher ionic conductivity can be obtained with these ratios.

Further, from the same viewpoint, when using lithium sulfide, diphosphorus pentasulfide, and a halogen simple substance, the content of the halogen simple substance relative to the total amount of lithium sulfide, diphosphorus pentasulfide, and halogen simple substance is preferably 1 to 50 % by mole, more preferably 2 to 40% by mole, still more preferably 3 to 25% by mole, and yet still more preferably 3 to 15% by mole.

When using lithium sulfide, diphosphorus pentasulfide, a halogen simple substance, and lithium halide, the content of halogen simple substance (α mol%) and the content of lithium halide (β mol%) relative to the total amount of lithium sulfide, diphosphorus pentasulfide, a halogen simple substance, and lithium halide, preferably satisfy the following formula (2), more preferably satisfy the following formula (3), still more preferably satisfy the following formula (4), and yet still more preferably satisfy the following formula (5).

$$2 \leq 2\alpha + \beta \leq 100 \ ...\ (2)$$

$$4 \leq 2\alpha + \beta \leq 80 \ ...\ (3)$$

$$6 \leq 2\alpha + \beta \leq 50 \ ...\ (4)$$

$$6 \leq 2\alpha + \beta \leq 30 \ ...\ (5)$$

When two types of halogens are used as simple substances, and the number of moles of halogen atoms in one substance is A1 while the number of moles of halogen atoms in the other substance is A2, A1 : A2 is preferably 1 to 99 : 99 to 1, more preferably 10 : 90 to 90 : 10, still more preferably 20 : 80 to 80 : 20, and yet still more preferably 30 : 70 to 70 : 30.

When two types of halogen simple substances are used and the two types of halogen simple substances are bromine and iodine, in a case where the number of moles of bromine is A1 and the number of moles of iodine is A2, A1 : A2 is preferably 1 : 99 to 99 : 1, more preferably 20 : 80 to 80 : 20, still more preferably 35 : 65 to 80 : 20, and yet still more preferably 45 : 55 to 70 : 30.

Further, when the two types of halogen simple substances are bromine and chlorine, and the number of moles of bromine is B1 while the number of moles of chlorine is B2, B1 : B2 is preferably 1 : 99 to 99 : 1, more preferably 15 : 85 to 75 : 25, still more preferably 25 : 75 to 60 : 40, and yet still more preferably 35 : 45 to 65 : 55.

(Intermediate)

When the heating (1) and the heating (2) are adopted, the intermediate is produced by the heating (1) and contains a compound having a mercapto group in its structure. The chemical composition of the intermediate depends on the raw material-containing substance to be used.

In a case where only the heating (1) is adopted and the heating (1) is performed by one time heating, the sulfide solid electrolyte is obtained via an intermediate during the heating (1), and thus the intermediate is not isolated in principle. In addition, when the heating (1) is performed by being divided into at least two times, an intermediate is generated by the first heating, and an intermediate is further generated by the second heating.

<Sulfide Solid Electrolyte>

The sulfide solid electrolyte produced in the present embodiment is a solid and is preferably granular. The sulfide solid electrolyte obtained by the production method of the present embodiment includes both a crystalline sulfide solid electrolyte having a crystal structure and an amorphous sulfide solid electrolyte. In the description herein, the "crystalline sulfide solid electrolyte" is a sulfide solid electrolyte in which a peak derived from the sulfide solid electrolyte is observed in an X-ray diffraction pattern in X-ray diffractometry, and is a material in which the presence or absence of a peak derived from a raw material of the sulfide solid electrolyte does not matter. That is, the crystalline sulfide solid electrolyte includes a crystal structure derived from the sulfide solid electrolyte, and a part thereof may be a crystal structure derived from the sulfide solid electrolyte, or the whole thereof may be a crystal structure derived from the sulfide solid electrolyte. As long as the crystalline sulfide solid electrolyte has the X-ray diffraction pattern as described above, the amorphous sulfide solid electrolyte may be contained in a part thereof. Therefore, the crystalline sulfide solid electrolyte includes a so-called glass ceramic obtained by heating an amorphous sulfide solid electrolyte to a crystallization temperature or higher.

In addition, in the description herein, the "amorphous sulfide solid electrolyte" means a material in which an X-ray diffraction pattern is a halo pattern in which a peak other than a peak derived from a material is not substantially observed in an X-ray diffraction measurement, and means that the presence or absence of a peak derived from a raw material of the sulfide solid electrolyte does not matter.

In addition, the contents of the lithium atom, the phosphorus atom, and the sulfur atom in the sulfide solid electrolyte can be determined from measurement by an inductively coupled plasma (ICP) emission spectroscopic analyzer, and the content of the organic group can be determined by paying attention to a characteristic functional group included in the organic group and appropriately combining a Fourier transform infrared spectrophotometer (FT-IR), solid nuclear magnetic resonance (NMR) spectroscopy, gas chromatography, a gas chromatograph mass spectrometer (GC-Mass), and the like.

(Amorphous Sulfide Solid Electrolyte)

The amorphous sulfide solid electrolyte obtained by the production method of the present embodiment preferably contains a lithium atom, a sulfur atom, a phosphorus atom, and, if necessary, a halogen atom. Typical examples thereof include sulfide solid electrolytes composed of lithium sulfide, phosphorus sulfide, and lithium halide, such as $Li_2S$-$P_2S_5$, $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and sulfide solid electrolytes containing other atoms such as an oxygen atom and a silicon atom, such as $Li_2S$-$P_2S_5$-$Li_2O$-LiI and $Li_2S$-$SiS_2$-$P_2S_5$-LiI. From the viewpoint of obtaining higher ionic conductivity, amorphous sulfide solid electrolytes composed of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The types of atoms constituting the amorphous sulfide solid electrolyte can be determined by, for example, an ICP emission spectrophotometer.

In the amorphous sulfide solid electrolyte obtained by the production method of the present embodiment, the

blending ratio (molar ratio) of lithium atoms, sulfur atoms, phosphorus atoms, and halogen atoms is 1.0 to 1.8 : 1.0 to 2.0 : 0.1 to 0.8 : 0.01 to 0.6 is preferable, more preferably 1.1 to 1.7 : 1.2 to 1.8 : 0.2 to 0.6 : 0.05 to 0.5, and still more preferably 1.2 to 1.6 : 1.3 to 1.7 : 0.25 to 0.5 : 0.08 to 0.4. Further, when bromine and iodine are used together as halogen atoms, the blending ratio (molar ratio) of lithium atoms, sulfur atoms, phosphorus atoms, bromine, and iodine is preferably 1.0 to 1.8 : 1.0 to 2. 0 : 0.1 to 0.8 : 0.01 to 0.3 : 0.01 to 0.3, more preferably 1.1 to 1.7 : 1.2 to 1.8 : 0.2 to 0. 6 : 0.02 to 0.25 : 0.02 to 0.25, still more preferably 1.2 to 1.6 : 1.3 to 1.7 : 0.25 to 0.5 : 0.03 to 0.2 : 0.03 to 0.2, yet still more preferably 1.35 to 1.45 : 1.4 to 1.7 : 0.3 to 0.45 : 0.04 to 0.18 : 0.04 to 0.18. By setting the blending ratio (molar ratio) of lithium atoms, sulfur atoms, phosphorus atoms, and halogen atoms within the above range, it becomes easy to obtain a solid electrolyte having a thio-LISICON Region II type crystal structure, an argyrodite type crystal structure, or the like to be described later and having a higher ionic conductivity.

(Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and examples of a crystal structure thereof include a $Li_3PS_4$ crystal structure, a $Li_4P_2S_6$ crystal structure, a $Li_7PS_6$ crystal structure, a $Li_7P_3S_{11}$ crystal structure, and a crystal structure having peaks in the vicinity of 2θ = 20.2° and in the vicinity of 23.6° (for example, JP 2013-16423 A).

Preferable examples of the solid electrolyte containing a halogen atom include a crystalline sulfide solid electrolyte having the above-described $Li_7PS_6$ structural skeleton and having an argyrodite type crystal structure in which a part of P is substituted with Si.

Examples of the compositional formulas of the argyrodite type crystal structure include crystal structures represented by the compositional formulas $Li_{7-x}P_{1-y}Si_yS_6$ and $Li_{7+x}P_{1-y}Si_yS_6$ (x is -0.6 to 0.6, and y is 0.1 to 0.6). The argyrodite type crystal structure represented by this compositional formula is a cubic or orthorhombic crystal, preferably a cubic crystal, and has peaks mainly appearing at positions of 2θ = 15.5°, 18.0°, 25.0°, 30.0°, 31.4°, 45.3°, 47.0°, and 52.0° in X-ray diffractometry using CuKα line.

Examples of the compositional formula of argyrodite type crystal structure include a compositional formula of $Li_{7-x-2y}PS_{6-x-y}Cl_x$ ($0.8 \leq x \leq 1.7$, $0 < y \leq -0.25x + 0.5$). The argyrodite type crystal structure represented by this compositional formula is preferably a cubic crystal, and has peaks mainly appearing at positions of 2θ = 15.5°, 18.0°, 25.0°, 30.0°, 31.4°, 45.3°, 47.0°, and 52.0° in X-ray diffractometry using CuKα line.

Further, examples of the compositional formula of the argyrodite type crystal structure include $Li_{7-x}PS_{6-x}Ha_x$ (Ha is Cl or Br, x is preferably 0.2 to 1.8). The argyrodite type crystal structure represented by this compositional formula is preferably a cubic crystal, and has peaks mainly appearing at positions of 2θ = 15.5°, 18.0°, 25.0°, 30.0°, 31.4°, 45.3°, 47.0°, and 52.0° in X-ray diffractometry using CuKα line.

Note that these peak positions may be shifted back and forth within a range of ±0.5°.

Examples also include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725). The crystal structure of the crystalline sulfide solid electrolyte obtained by the production method of the sulfide solid electrolyte of the present embodiment is preferably the thio-LISICON Region II type crystal structure among above, from the viewpoint of obtaining higher ionic conductivity. Herein, the term "thio-LISICON Region II type crystal structure" refers to either a $Li_{4-x}Ge_{1-x}P_xS_4$ system thio-LISICON Region II type crystal structure or a crystal structure similar to a $Li_{4-x}Ge_{1-x}P_xS_4$ system thio-LISICON Region II type crystal structure. Herein, the notation of the crystal structure of the "$Li_{4-x}Ge_{1-x}P_xS_4$ system thio-LISICON Region II type" means that the crystal structure is found as a crystal structure composed of Li, Ge, P, and S atoms in the above-mentioned literature. Since the sulfide solid electrolyte obtained by the production method of the present embodiment preferably contains a lithium atom, a phosphorus atom, a sulfur atom, and a halogen atom, the sulfide solid electrolyte may not be represented by the compositional formula of "$Li_{4-x}Ge_{1-x}P_xS_4$" in the "$Li_{4-x}Ge_{1-x}P_xS_4$ system thio-LISICON Region II type". However, in a case where the sulfide solid electrolyte obtained by the production method of the present embodiment has the same diffraction peak as the above-described "thio-LISICON Region II type crystal structure" (including the above-described "similar crystal structure"), it can be said that the sulfide solid electrolyte obtained by the production method of the present embodiment preferably has a thio-LISICON Region II type crystal structure formed of a lithium atom, a phosphorus atom, a sulfur atom, and a halogen atom. The same applies to the above-described argyrodite type crystal structure.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structures is

80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline $Li_3PS_4$ ($\beta$-$Li_3PS_4$).

In the X-ray diffractometry using CuK$\alpha$ line, the diffraction peak of the $Li_3PS_4$ crystal structure appears, for example, in the vicinity of $2\theta$ = 17.5°, 18.3°, 26.1°, 27.3°, and 30.0°, the diffraction peak of the $Li_4P_2S_6$ crystal structure appears, for example, in the vicinity of $2\theta$ = 16.9°, 27.1°, and 32.5°, the diffraction peak of the $Li_7PS_6$ crystal structure appears, for example, in the vicinity of $2\theta$ = 15.3°, 25.2°, 29.6°, and 31.0°, the diffraction peak of the $Li_7P_3S_{11}$ crystal structure appears, for example, in the vicinity of 20 = 17.8°, 18.5°, 19.7°, 21.8°, 23.7°, 25.9°, 29.6°, and 30.0°, the diffraction peak of the $Li_{4-x}Ge_{1-x}P_xS_4$ system thio-LISICON Region II type crystal structure appears, for example, in the vicinity of 20 = 20.1°, 23.9°, and 29.5°, and the diffraction peak of the crystal structure similar to the $Li_{4-x}Ge_{1-x}P_xS_4$ system thio-LISICON Region II type appears, for example, in the vicinity of 20 = 20.2° and 23.6°. Note that these peak positions may be shifted back and forth within a range of $\pm$0.5°.

In the sulfide solid electrolyte produced in the present embodiment, the contents of lithium atoms, sulfur atoms, phosphorus atoms, and halogen atoms in the crystalline sulfide solid electrolyte are the same as those in the amorphous sulfide solid electrolyte.

In addition, the composition ratio of the atoms contained in the crystalline sulfide solid electrolyte is a composition ratio according to a compositional formula corresponding to each of the above-described various crystal structures, and is preferably within the range of the composition ratio of each atom contained in the above-described amorphous sulfide solid electrolyte. When the composition ratio of the atoms contained in the crystalline sulfide solid electrolyte is within the range of the composition ratio of each atom, a thio-LISICON Region II type crystal structure or an argyrodite type crystal structure is easily formed among the above-described crystal structures.

(Properties of Sulfide Solid Electrolyte)

The shape of the sulfide solid electrolyte obtained by the production method of the present embodiment is granular.

The median diameter ($D_{50}$) of the granular sulfide solid electrolyte is preferably less than 15 $\mu$m. As a result, a contact interface between the electrode active material and the sulfide solid electrolyte is easily formed, and a path of ion conduction and electron conduction is improved. The median diameter is more preferably 7.0 $\mu$m or less, still more preferably 5.0 $\mu$m or less, and yet still more preferably 4.0 $\mu$m or less. The median diameter can be adjusted by the pulverization. The lower limit value is not particularly limited, and is preferably 0.01 $\mu$m or more, more preferably 0.03 $\mu$m or more, still more preferably 0.05 $\mu$m or more, and yet still more preferably 0.1 $\mu$m or more. In the production method of the present embodiment, although it cannot be said unconditionally because it depends on the raw material-containing substance to be used, heating conditions such as heating (1) and heating (2), and the like, a sulfide solid electrolyte having the above median diameter may be obtained even if the obtained sulfide solid electrolyte is not pulverized, or the sulfide solid electrolyte may be adjusted to have the above median diameter by pulverization.

Similarly, the particle diameter ($D_{10}$) at a cumulative volume of 10% of the particulate sulfide solid electrolytes is preferably 0.05 $\mu$m or more and 10.0 $\mu$m or less, more preferably 0.50 $\mu$m or more and 6.0 $\mu$m or less, and still more preferably 1.0 $\mu$m or more and 4.0 $\mu$m or less.

Also, the particle diameter ($D_{90}$) at a cumulative volume of 90% of the particulate sulfide solid electrolyte is preferably 0.10 $\mu$m or more and 20.0 $\mu$m or less, more preferably 1.0 $\mu$m or more and 15.0 $\mu$m or less, and still more preferably 3.0 $\mu$m or more and 10.0 $\mu$m or less.

The particle size distribution of the particulate sulfide solid electrolyte is represented by $(D_{90} - D_{10})/D_{50}$, and the particle size distribution of 3.00 or less is preferable because the particle size distribution can be said to be sharp. The particle size distribution of 2.50 or less is more preferable, the particle size distribution of 2.00 or less is still more preferable, and the particle size distribution of 1.50 or less is yet still more preferable. The lower limit value is not particularly limited, and is 0.01 or more in view of performance and productivity of a spray drying device.

The median diameter of the sulfide solid electrolyte can be measured, for example, by the measurement method described in Examples. In addition, the particle size distribution can be determined, for example, from the shape of the particle size distribution of the sulfide solid electrolyte.

The crystallite diameter of the sulfide solid electrolyte of the present embodiment is preferably 30 nm or more. From the viewpoint of improving the ionic conductivity, it is preferably 33 nm or more, more preferably 35 nm or more, still more preferably 40 nm or more, yet still more preferably 70 nm or more, and more excellently preferably 80 nm or more. The upper limit value of the crystallite diameter is not particularly limited, and from the viewpoint of productivity, it is preferably 300 nm or less, more preferably 250 nm or less, still more preferably 200 nm or less, yet still more preferably 150 nm or less, and more excellently preferably 130 nm or less.

The ionic conductivity of the sulfide solid electrolyte of the present embodiment obtained by the production method of the present embodiment is extremely high because the particle size is controlled, and can be usually 0.01

mS/cm or more. The ionic conductivity is more preferably 1.00 mS/cm or more, still more preferably 2.00 mS/cm or more, yet still more preferably 2.50 mS/cm or more, more excellently preferably 3.00 mS/cm or more, and particularly preferably 3.50 mS/cm or more. The upper limit value is not particularly limited.

<Mixing>

In the method for producing a sulfide solid electrolyte of the present embodiment, in the heating (1), the heating (2), and the temperature raising, mixing is preferable because the progress of the reaction is promoted.

The mixing may include stirring and pulverization, and it is preferable to use a stirrer, a mixer, or a pulverizer, and it is more preferable to use a stirrer and a mixer.

Examples of the stirrer and the mixer include a mechanical stirring type mixer equipped with a stirring blade in a tank. Examples of the mechanical stirring type mixer include a high-speed stirring type mixer and a double-arm type mixer, and the high-speed stirring type mixer is preferably used from the viewpoint of increasing the uniformity of the raw materials in the mixture of the raw material-containing substance and the complexing agent and obtaining higher ionic conductivity. Further, examples of the high-speed stirring type mixer include a vertical axis rotation type mixer and a horizontal axis rotation type mixer, and either type of mixer may be used.

Examples of the shape of the stirring blade used in the mechanical stirring type mixer include a blade type, an arm type, an anchor type, a paddle type, a full-zone type, a ribbon type, a multi-stage blade type, a double arm type, a shovel type, a twin-screw blade type, a flat blade type, and a C-type blade type, and from the viewpoint of enhancing the uniformity of the raw materials in the raw material-containing substance and obtaining higher ionic conductivity, a shovel type, a flat blade type, a C-type blade type, and the like are preferable.

In addition, in the case of a small amount of production, stirring using a stirring bar may be performed.

As the pulverizer, those described above can be used.

(Solvent)

In the production method of the present embodiment, a solvent can be used in the heating (1) and/or the heating (2) to obtain a slurry of the raw material-containing substance and/or the intermediate. In particular, in the heating (1), it is preferable to use a solvent because hydrogen sulfide in the hydrogen sulfide atmosphere is dissolved in the solvent and the reaction with the raw material-containing substance easily proceeds. As the solvent to be used, a solvent conventionally used in the production of a sulfide solid electrolyte can be widely adopted, and a nonpolar solvent and a dispersant are preferably exemplified.

It is preferable that the solvent contains a nonpolar solvent, which will be described later, because the hydrogen sulfide is dissolved while suppressing the influence of a reaction or the like on the raw material-containing substance and the intermediate, and the hydrogen sulfide is easily brought into contact with the raw material-containing substance. In addition, it is preferable that the solvent contains a dispersant, which will be described later, because the raw material-containing substance is easily dispersed in the solvent, and thus the generation reaction of the intermediate and the sulfide solid electrolyte is easily proceeded.

The amount of the solvent used with respect to 1 g of the total mass of the raw material-containing substances is preferably 0.1 g or more and 50.0 g or less, more preferably 1.0 g or more and 30.0 g or less, and still more preferably 5.0 g or more and 25.0 g or less.

Hereinafter, the nonpolar solvent and the dispersant will be described.

(Nonpolar Solvent)

The nonpolar solvent used in the production method of the present embodiment is preferably a solvent in which the raw material-containing substance, the intermediate, and the sulfide solid electrolyte are hardly dissolved, specifically, a hydrocarbon solvent which does not contain a heteroatom. Examples of the nonpolar solvent include aliphatic hydrocarbon solvents such as pentane, hexane, 2-ethylhexane, heptane, octane, decane, undecane, dodecane, and tridecane; alicyclic hydrocarbon solvents such as cyclohexane, methylcyclohexane, and ethylcyclohexane; and aromatic hydrocarbon solvents such as benzene, toluene, xylene, mesitylene, ethylbenzene, and tert-butylbenzene, and the nonpolar solvent may be appropriately selected from these and used.

Among these solvents, an aliphatic hydrocarbon solvent and an aromatic hydrocarbon solvent are preferable, and an aromatic hydrocarbon solvent is more preferable. More specifically, 2-ethylhexane, heptane, octane, cyclohexane, benzene, toluene, xylene, ethylbenzene, or mesitylene is preferable, methylcyclohexane, benzene, toluene, xylene, or ethylbenzene is more preferable, and toluene or ethylbenzene is still more preferable.

These may be used alone or in combination.

The amount of the nonpolar solvent used with respect to 1 g of the total mass of the raw material-containing

substances is preferably 0.1 g or more and 50.0 g or less, more preferably 0.5 g or more and 30.0 g or less, still more preferably 1.0 g or more and 20.0 g or less, and yet still more preferably 3.0 g or more and 10.0 g or less.

(Dispersant)

It is preferable that the dispersant used in the production method of the present embodiment has a property of dispersing the raw material-containing substance, the intermediate, and the sulfide solid electrolyte, but does not react with these substances. More specifically, an ether-based compound is preferable.

Examples of the ether compound include ether compounds such as aliphatic ethers, alicyclic ethers, heterocyclic ethers, and aromatic ethers, and these ether compounds can be used alone or in combination of a plurality of kinds thereof.

Examples of the aliphatic ether include monoethers such as dimethyl ether, diethyl ether, diisopropyl ether, dibutyl ether, and tert-butyl methyl ether; diethers such as dimethoxymethane, dimethoxyethane, diethoxymethane, and diethoxyethane; polyethers having three or more ether groups such as diethylene glycol dimethyl ether (diglyme) and triethylene oxide glycol dimethyl ether (triglyme); and ethers containing a hydroxy group such as diethylene glycol and triethylene glycol.

The number of carbon atoms of the aliphatic ether is preferably 2 or more, more preferably 3 or more, and still more preferably 4 or more, and the upper limit is preferably 10 or less, more preferably 8 or less, and still more preferably 6 or less. The number of carbon atoms of the aliphatic hydrocarbon group in the aliphatic ether is preferably 1 or more, and the upper limit is preferably 6 or less, more preferably 4 or less, and still more preferably 3 or less.

Examples of the alicyclic ether include ethylene oxide, propylene oxide, tetrahydrofuran, tetrahydropyran, dimethoxytetrahydrofuran, cyclopentyl methyl ether, dioxane, and dioxolane, and examples of the heterocyclic ether include furan, benzofuran, benzopyran, dioxene, dioxin, morpholine, methoxyindole, and hydroxymethyldimethoxypyridine.

The number of carbon atoms of the alicyclic ether and heterocyclic ether is preferably 3 or more, and more preferably 4 or more, and the upper limit is preferably 16 or less, and more preferably 14 or less.

Examples of the aromatic ether include methyl phenyl ether (anisole), ethyl phenyl ether, dibenzyl ether, diphenyl ether, benzylphenyl ether, and naphthyl ether.

The number of carbon atoms of the aromatic ether is preferably 7 or more, and more preferably 8 or more, and the upper limit is preferably 16 or less, more preferably 14 or less, and still more preferably 12 or less.

The amount of the dispersant used with respect to 100 g of the total mass of the raw material-containing substances is preferably 0.10 g or more and 500.00 g or less, more preferably 0.50 g or more and 300.00 g or less, still more preferably 0.80 g or more and 200.00 g or less, and yet still more preferably 1.00 g or more and 100.00 g or less.

(Performing Crystallization)

The method for producing a sulfide solid electrolyte of the present embodiment may further include performing crystallization in order to obtain a crystalline sulfide solid electrolyte. The crystallization is preferably carried out by heating.

In addition, it is also preferable to increase the crystallite diameter by heating the crystalline sulfide solid electrolyte because the ionic conductivity can be increased.

Although crystallization proceeds by the heating (1), or the heating (1) and the heating (2), it is preferable to include performing crystallization because a sulfide solid electrolyte having a target crystal is obtained.

When the amorphous sulfide solid electrolyte is heated to obtain the crystalline sulfide solid electrolyte, the heating temperature may be determined according to the structure of the crystalline sulfide solid electrolyte. The heating temperature may be in a range of preferably 5°C or higher, more preferably 10°C or higher, and still more preferably 20°C or higher from the temperature of the peak top of the exothermic peak observed on the lowest temperature side as a starting point when the amorphous sulfide solid electrolyte is subjected to differential thermal analysis (DTA) under a temperature rise condition of 10°C/min using a differential thermal analyzer (DTA apparatus), and the upper limit is not particularly limited, and may be about 40°C or lower. By setting the temperature to such a range, the crystalline sulfide solid electrolyte can be obtained more efficiently and reliably. The heating temperature for obtaining the crystalline sulfide solid electrolyte varies depending on the structure of the crystalline sulfide solid electrolyte to be obtained, and thus cannot be generally defined, but is usually preferably 200°C or higher, more preferably 300°C or higher, and still more preferably 350°C or higher. The upper limit thereof is not particularly limited, and is preferably 600°C or lower, more preferably 500°C or lower, and still more preferably 450°C or lower.

The heating time is not particularly limited as long as it is a time for obtaining a desired amorphous sulfide solid electrolyte or crystalline sulfide solid electrolyte, and is, for example, preferably 1 minute or more, more preferably 10 minutes or more, still more preferably 30 minutes or more, and yet still more preferably 1 hour or more. On the other hand, the upper limit of the heating time is not particularly limited, however it is preferably 24 hours or less, more preferably 20 hours or less, still more preferably 15 hours or less, and yet still more preferably 10 hours or less.

Moreover, heating is preferably performed in an inert gas atmosphere (for example, a nitrogen atmosphere or an argon atmosphere) or a reduced pressure atmosphere (in particular, a vacuum). This is because deterioration (for example, oxidation) of the crystalline sulfide solid electrolyte can be prevented. The heating method is not particularly limited, however, examples thereof include methods using a hot plate, a vacuum heating device, an argon gas atmosphere furnace, and a firing furnace. Further, industrially, a horizontal dryer or a horizontal vibrating fluidized dryer having a heating unit and a feed mechanism may be used, and they may be selected depending on the processing amount to be heated.

(Drying)

The method for producing the sulfide solid electrolyte of the present embodiment preferably includes forming the raw material-containing substance into a slurry using a solvent and drying the slurry in order to obtain the sulfide solid electrolyte as a powder in a case where the raw material-containing substance is brought into contact with hydrogen sulfide.
Examples of the drying method include filtration using a glass filter or the like, solid-liquid separation by decantation, and solid-liquid separation using a centrifuge or the like. For the solid-liquid separation, specifically, decantation to remove the supernatant complexing agent and the solvent which is optionally used after the suspension is transferred to a container and the solid is precipitated, furthermore, for example, filtration using a glass filter with a pore size of about 10 to 200 μm, preferably 20 to 150 μm, is easy.
Moreover, it can also be dried by heating using a dryer.
The drying may be performed under any pressure condition, such as increased pressure, normal pressure, or reduced pressure, and is preferably performed under normal pressure or reduced pressure. In particular, considering drying at a lower temperature, it is preferable to dry using a vacuum pump, under reduced pressure or even under vacuum.
As the temperature conditions for drying, the drying may be performed at a temperature equal to or higher than the boiling point of the solvent used as necessary. Specific temperature conditions cannot be determined completely since they may change depending on the type of the solvent used, however preferably at 5°C or higher, more preferably at 10°C or higher, and still more preferably at 15°C or higher, and the upper limit is preferably 110°C or lower, more preferably 85°C or lower, and still more preferably 70°C or lower.
In addition, as for the pressure conditions, as described above, it is preferable to be under normal pressure or reduced pressure, and in the case of reduced pressure, specifically, preferably 85 kPa or less, more preferably 80 kPa or less, and still more preferably 70 kPa or less. The lower limit may be a vacuum (0 KPa), and considering ease of pressure adjustment, it is preferably 1 kPa or more, more preferably 2 kPa or more, and still more preferably 3 kPa or more.

(Application)

The sulfide solid electrolyte obtained by the production method of the present embodiment has a high ionic conductivity and a small median diameter, and thus exhibits excellent battery performance and is suitably used for a lithium ion battery, particularly an all solid-state battery.
The sulfide solid electrolyte obtained by the production method of the present embodiment may be used for a positive electrode layer, a negative electrode layer, or an electrolyte layer. Each of these layers can be produced by a known method.
In addition, in the battery, a current collector is preferably used in addition to the positive electrode layer, the electrolyte layer, and the negative electrode layer, and a known current collector can be used. For example, a layer obtained by coating a material that reacts with the sulfide solid electrolyte, such as Au, Pt, Al, Ti, or Cu, with Au or the like can be used.

Examples

Hereinafter, the present invention will be specifically described with reference to Examples, but the present invention is not limited to these Examples.

(1) Measurement Method

(1-1) Determination of Crystal Form by Powder X-Ray Diffraction (XRD) Measurement

Powder X-ray diffraction (XRD) measurement was performed as follows.
Each of the powders of the sulfide solid electrolyte obtained in Examples and Comparative Examples was filled in a groove having a diameter of 20 mm and a depth of 0.2 mm, and was leveled with glass to obtain a sample. This sample

was sealed with a Kapton film for XRD and measured under the following conditions without being exposed to air.

Measuring device: D2 PHASER, manufactured by Bruker Co., Ltd.
Tube voltage: 30 kV
Tube current: 10 mA
X-ray wavelength: Cu-Kα line (1.5418 Å)
Optical system: concentration method
Slit configuration: solar slit 4°, divergence slit 1 mm, Kβ filter (Ni plate) used
Detector: semiconductor detector
Measurement range: 20 = 10 to 60 deg
Step width, scan speed: 0.05 deg, 0.05 deg/sec

The crystal form was determined from the value of 20 of the obtained peak.

(1-2) Measurement of Residual Amount of $Li_2S$

From the results of XRD measurement of the sulfide solid electrolytes obtained in Examples and Comparative Examples, the residual amount of $Li_2S$ remaining in each sulfide solid electrolyte was confirmed. The residual amount of $Li_2S$ was analyzed using an Excel Solver function. The 2θ of the measurement result obtained in (1-1) was defined as A, the peak intensity was defined as B, the baseline used for the calculation was defined as C, and the strength of the glass was defined as D. The peak intensity at the time of the calculation of the baseline was empirically calculated from the measurement system for each 2θ as follows.

$$C = -45.72*A + 4600 - 457.2$$

The glass strength D was calculated by the following equation, where E, F, G, and H are peak angles, I, J, K, and L are widths, and M, N, O, and P are strengths.

$$D = M \times e^{(-((A-E)^2/I^2/2))/\sqrt{2\pi}/I} + N \times e^{(-((A-F)^2/J^2/2))/\sqrt{2\pi}/J} + O \times e^{(-((A-G)^2/K^2/2))/\sqrt{2\pi}/K} + P \times e^{(-((A-H)^2/L^2/2))/\sqrt{2\pi}/L}$$

In addition, when the background correction data for calculation is Q, the following is obtained.

$$Q = B - C$$

The peak shift of the peak position at the initial stage of the reaction of the raw material $Li_2S$ and the $Li_2S$ peak to be calculated were set as R, and R was added to all the peaks to be reflected on the above Q. Further, the peak intensity at the initial stage of the reaction of $Li_2S$ was set as S, and the peak intensity was fitted by multiplying the peak intensity S at the initial stage of the reaction by a coefficient T. When the total of the residuals of the fitting is set as U, the following is obtained.

$$U = \sum(Q - T \times S - C)$$

In the calculation using the Solver function, E, F, G, H, I, J, K, L, M, N, O, P, R, and T were used as variables, and calculation was performed such that U was minimized in GRG Nonlinear, and the residual amount of $Li_2S$ was fitted.

(1-3) Measurement of Ionic Conductivity

The ionic conductivity of the sulfide solid electrolytes obtained in the present Examples and Comparative Examples was measured as follows.

From each of the crystalline solid electrolytes obtained in Examples and Comparative Examples, a circular pellet having a diameter of 10 mm (cross-sectional area S: 0.785 $cm^2$) and a height (L) of 0.1 to 0.3 cm was molded and used as a sample. Electrode terminals were taken from the top and bottom of the sample, and measured by an alternating current impedance method at 25°C (frequency range: 5 MHz to 0.5 Hz, amplitude: 10 mV), and a Cole-Cole plot was obtained. The real part Z' (Ω) at the point where -Z" (Ω) becomes minimum in the vicinity of the right end of an arc observed in a region on the high frequency side was defined as the bulk resistance R (Ω) of the electrolyte, and the ionic conductivity σ (S/cm) was calculated according to the following equations.

$$R = \rho(L/S)$$

$$\sigma = 1/\rho$$

(1-4) Median Diameter ($D_{50}$)

The volume-based median diameter was measured using a laser diffraction/scattering particle diameter distribution measuring device ("Partica LA-950V2 Model LA-950W2", manufactured by HORIBA, Ltd.). A mixture of dehydrated toluene (manufactured by FUJIFILM Wako Pure Chemical Corporation, special grade) and tertiary butyl alcohol (manufactured by FUJIFILM Wako Pure Chemical Corporation, special grade) at a weight ratio of 93.8:6.2 was used as a dispersion medium. Into a flow cell of the device, 50 ml of the dispersion medium was injected and circulated, and then, an object to be measured was put therein and was subjected to an ultrasonic treatment, followed by measurement of the particle diameter distribution. The amount of the measured object put was adjusted so that the red light transmission (R) corresponding to the particle concentration was within 90 to 90% and the blue light transmission (B) was within 70 to 90% in a measurement screen defined in the device. In addition, as the calculation conditions, 2.16 and 1.49 were used as the value of the refractive index of the measurement target and the value of the refractive index of the dispersion medium, respectively. In the setting of the distribution form, the particle diameter calculation was performed by fixing the number of repetitions to 15 times, and the median diameter ($D_{50}$) was obtained.

(2) Method for Producing Slurry

(2-1) Method for Producing Slurry (1)

Under a nitrogen atmosphere, 33.06 g of lithium sulfide ($Li_2S$), 45.69 g of diphosphorus pentasulfide ($P_2S_5$) and 591 g of ethylbenzene were placed in a 1 L reaction vessel equipped with a stirring blade. After rotating the stirring blade, pulverization treatment was started using a bead mill capable of circulating operation (Starmill LMZ015, manufactured by Ashizawa Finetech Ltd.) under predetermined conditions (bead material: zirconia, bead diameter: 0.5 mmφ, amount of beads used: 456 g, pump flow rate: 650 mL/min, circumferential speed: 8 m/s, mill jacket temperature: 0°C). While performing the pulverization treatment, a solution obtained by dissolving 13.04 g of iodine ($I_2$) in 260 g of ethylbenzene was added dropwise to the reaction vessel over a period of 30 minutes. Then, 8.21 g of bromine ($Br_2$) was added dropwise to the reaction vessel over a period of 30 minutes. After the dropwise addition was completed, the pulverization treatment was performed for another 30 minutes to obtain a slurry (1).

(2-2) Method for Producing Slurry (2)

(2-1) A slurry (2) was obtained in the same manner as in the method for producing the slurry (1), except that toluene was used instead of ethylbenzene.

(Example 1)

Into a Schlenk bottle (volume: 100 mL) containing a stirring bar, 30 mL of the slurry (1) was charged under a nitrogen atmosphere, and the stirring bar was rotated. After hydrogen sulfide ($H_2S$) was flowed into the slurry (1) at a flow rate of 100 mL/min at room temperature for 1 hour, the temperature was raised to 50°C while the hydrogen sulfide was flowing, and the hydrogen sulfide was flowed into the slurry (1) at 50°C for 1 hour. Further, the temperature was raised to 130°C while the hydrogen sulfide was flowing, and when the temperature reached 130°C, the flow of the hydrogen sulfide was stopped, and nitrogen ($N_2$) was flowed at a flow rate of 100 mL/min and nitrogen was flowed into the slurry (1) at 130°C for 1 hour. The slurry (1) was then cooled to room temperature and dried under reduced pressure at room temperature, thereby obtaining an amorphous sulfide solid electrolyte (1).

The obtained amorphous sulfide solid electrolyte (1) was subjected to XRD measurement, and the residual amount of $Li_2S$ was calculated. The result was 7%. The X-ray diffraction pattern was shown in Fig. 2.

In addition, the obtained amorphous sulfide solid electrolyte (1) was depressurized at 180°C for 2 hours to obtain a crystalline solid electrolyte (1). The obtained crystalline solid electrolyte (1) was subjected to XRD measurement, and in the X-ray diffraction pattern, crystallization peaks were detected at 2θ = 20.2° and 23.6°, and it was confirmed that the crystalline solid electrolyte (1) had a thio-LISICON Region II type crystal structure. The X-ray diffraction pattern was shown in Fig. 2. The ionic conductivity of the obtained crystalline solid electrolyte (1) was measured and found to be 1.2 mS/cm.

(Example 2)

Into a Schlenk bottle (volume: 100 mL) containing a stirring bar, 30 mL of the slurry (1) and 4 mL of dibutyl ether were charged under a nitrogen atmosphere, and the stirring bar was rotated. After hydrogen sulfide ($H_2S$) was flowed into the slurry at a flow rate of 100 mL/min at room temperature for 1 hour, the temperature was raised to 50°C while the hydrogen sulfide was flowing, and the hydrogen sulfide was flowed into the slurry (1) at 50°C for 1 hour. Further, the temperature was raised to 110°C while the hydrogen sulfide was flowing, and when the temperature reached 110°C, the flow of the hydrogen sulfide was stopped, and nitrogen ($N_2$) was flowed at a flow rate of 100 mL/min into the slurry (1) at 110°C for 1 hour. The slurry was then cooled to room temperature and dried under reduced pressure at room temperature, thereby obtaining an amorphous sulfide solid electrolyte (2).

The obtained amorphous sulfide solid electrolyte (2) was subjected to XRD measurement, and the residual amount of $Li_2S$ was calculated. The result was 3%. The X-ray diffraction pattern was shown in Fig. 3.

In addition, the obtained amorphous sulfide solid electrolyte (2) was depressurized at 180°C for 2 hours to obtain a crystalline solid electrolyte (2). The obtained crystalline solid electrolyte (2) was subjected to XRD measurement, and in the X-ray diffraction pattern, crystallization peaks were detected at $2\theta$ = 20.2° and 23.6°, and it was confirmed that the crystalline solid electrolyte (2) had a thio-LISICON Region II type crystal structure. The X-ray diffraction spectra are shown in Fig. 3. The ionic conductivity of the obtained crystalline solid electrolyte (2) was measured and found to be 0.9 mS/cm.

(Example 3)

An amorphous sulfide solid electrolyte (3) and a crystalline solid electrolyte (3) were obtained in the same manner as in Example 2 except that the slurry (2) was used in place of the slurry (1).

The residual amount of $Li_2S$ was measured using the obtained amorphous sulfide solid electrolyte (3), and the crystal type and the ionic conductivity were measured using the crystalline solid electrolyte (3). The measurement results were described in Table 2. The X-ray diffraction patterns of the amorphous sulfide solid electrolyte (3) and the crystalline solid electrolyte (3) were shown in Fig. 4.

(Example 4)

Into a Schlenk bottle (volume: 100 mL) containing a stirring bar, 30 mL of the slurry (1) and 4 mL of dibutyl ether were charged under a nitrogen atmosphere, and the stirring bar was rotated. Nitrogen ($N_2$) was allowed to flow through the slurry at a flow rate of 100 mL/min, and the temperature was raised to 110°C. When the temperature reached 110°C, the flow of nitrogen was switched to the flow of hydrogen sulfide ($H_2S$) at a flow rate of 100 mL/min, and hydrogen sulfide was allowed to flow at 110°C for 1 hour. Further, the flow of hydrogen sulfide was stopped, and nitrogen was allowed to flow at a flow rate of 100 mL/min and at 110°C for 1 hour. The slurry was then cooled to room temperature and dried under reduced pressure at room temperature, thereby obtaining an amorphous sulfide solid electrolyte (4).

The obtained amorphous sulfide solid electrolyte (4) was depressurized at 180°C for 2 hours to obtain a crystalline solid electrolyte (4).

The residual amount of $Li_2S$ was measured using the obtained amorphous sulfide solid electrolyte (4), and the crystal type and the ionic conductivity were measured using the crystalline solid electrolyte (4). The measurement results were described in Table 2. The X-ray diffraction patterns of the amorphous sulfide solid electrolyte (4) and the crystalline solid electrolyte (4) were shown in Fig. 5.

(Comparative Example 1)

An amorphous sulfide solid electrolyte (C1) and a crystalline solid electrolyte (C1) were obtained in the same manner as in Example 1 except that nitrogen ($N_2$) was allowed to flow instead of hydrogen sulfide ($H_2S$).

The residual amount of $Li_2S$, the crystal type, and the ionic conductivity were measured using the obtained amorphous sulfide solid electrolyte (C1) and crystalline solid electrolyte (C1). The measurement results were described in Table 2. The X-ray diffraction patterns of the amorphous sulfide solid electrolyte (C1) and the crystalline solid electrolyte (C1) were shown in Fig. 6.

Table 1 summarizes the outline of the production methods carried out in Examples 1 to 4 and Comparative Example 1. In the table, "r.t." means room temperature, and "$H_2S$" and "$N_2$" mean in a hydrogen sulfide stream and in a nitrogen stream, respectively.

[Table 1]

Table 1

| | Raw material | Solvent | Stirring at room temperature | Heating (1) | Temperature raising | Heating (2) |
|---|---|---|---|---|---|---|
| Example 1 | Slurry (1) | Ethylbenzene | r.t. for 1 hour | 50°C for 1 hour | from 50°C to 130°C | 130°C for 1 hour |
| | | | $H_2S$ | $H_2S$ | $H_2S$ | $N_2$ |
| Example 2 | Slurry (1) | Ethylbenzene | r.t. for 1 hour | 50°C for 1 hour | from 50°C to 110°C | 110°C for 1 hour |
| | | Dibutyl ether | $H_2S$ | $H_2S$ | $H_2S$ | $N_2$ |
| Example 3 | Slurry (2) | Toluene | r.t. for 1 hour | 50°C for 1 hour | from 50°C to 110°C | 110°C for 1 hour |
| | | Dibutyl ether | $H_2S$ | $H_2S$ | $H_2S$ | $N_2$ |
| Example 4 | Slurry (1) | Ethylbenzene | from r.t. to 110°C | 110°C for 1 hour | | 110°C for 1 hour |
| | | Dibutyl ether | $N_2$ | $H_2S$ | | $N_2$ |
| Comparative Example 1 | Slurry (1) | Ethylbenzene | r.t. for 1 hour | 50°C for 1 hour | from 50°C to 130°C | 130°C for 1 hour |
| | | | $N_2$ | $N_2$ | $N_2$ | $N_2$ |

[Table 2]

Table 2

| | Residual amount of $Li_2S$ | Crystal form | Ionic conductivity |
|---|---|---|---|
| Example 1 | 7% | R-II | 1.2 |
| Example 2 | 3% | R-II | 0.9 |
| Example 3 | 4% | R-II | 0.9 |
| Example 4 | 10% | R-II | 0.5 |
| Comparative Example 1 | 33% | Insufficient reaction | 0.1 |

It was found that in the produced powders (1) to (4), the $Li_2S$ was consumed, and the residual amount of the $Li_2S$ was small. In addition, it was possible to confirm that the crystalline solid electrolytes (1) to (4) had the target thio-LISICON Region II type crystal structure (described as R-II in Table 2), and it was also possible to confirm that the crystalline solid electrolytes (1) to (4) exhibited high ionic conductivity.

On the other hand, in the powder (C1) and the crystalline solid electrolyte (C1) obtained in Comparative Example 1, the $Li_2S$ remained as much as 33%, and it was found that the reaction did not sufficiently proceed. In addition, it was found from XRD that the target crystal structure was not obtained (described as insufficient reaction in Table 2) because the reaction did not sufficiently proceed, and the ionic conductivity was also low.

(Example 5)

Into a Schlenk bottle (volume: 100 mL) containing a stirring bar, 30 mL of the slurry (1) and 4 mL of dibutyl ether were charged under a nitrogen atmosphere, and the stirring bar was rotated. After hydrogen sulfide ($H_2S$) was flowed into the slurry at a flow rate of 100 mL/min at room temperature for 1 hour, the temperature was raised to 50°C while the hydrogen sulfide was flowing, and the hydrogen sulfide was flowed into the slurry (1) at 50°C for 1 hour. Further, the temperature was raised to 100°C while the hydrogen sulfide was flowing, and the hydrogen sulfide was flowed into the slurry at 100°C for 1 hour. Thereafter, the temperature was raised to 110°C while the hydrogen sulfide was flowing, and when the temperature reached 110°C, the flow of the hydrogen sulfide was stopped, and nitrogen ($N_2$) was flowed at a flow rate of 100 mL/min into the slurry (1) at 110°C for 1 hour. The slurry was cooled to room temperature and dried under

reduced pressure at room temperature, thereby obtaining an amorphous sulfide solid electrolyte (5).

In addition, the obtained amorphous sulfide solid electrolyte (5) was depressurized at 180°C for 2 hours to obtain a crystalline solid electrolyte (5).

The residual amount of $Li_2S$ was measured using the obtained amorphous sulfide solid electrolyte (5), and the crystal type and the ionic conductivity were measured using the crystalline solid electrolyte (5). The measurement results were described in Table 4. The X-ray diffraction patterns of the amorphous sulfide solid electrolyte (5) and the crystalline solid electrolyte (5) were shown in Fig. 7.

(Example 6)

Into a reaction vessel (volume: 1 L) equipped with a stirring blade, 450 mL of the slurry (2) and 60 mL of dibutyl ether were charged under a nitrogen atmosphere, and the stirring blade was rotated. After hydrogen sulfide ($H_2S$) was flowed into the slurry at a flow rate of 100 mL/min at room temperature for 90 minutes, the temperature was raised to 50°C while the hydrogen sulfide was flowing, and the hydrogen sulfide was flowed into the slurry (1) at 50°C for 90 minutes. Thereafter, the temperature was lowered to room temperature while the hydrogen sulfide was flowing, and when the temperature reached room temperature, the flow of the hydrogen sulfide was stopped, and nitrogen ($N_2$) was flowed at a flow rate of 100 mL/min at room temperature for 1 hour. Thereafter, a pulverization treatment was carried out for 30 minutes using a bead mill capable of circulating operation (Starmill LMZ015, manufactured by Ashizawa Finetech Ltd.) under predetermined conditions (bead material: zirconia, bead diameter: 0.3 mmφ, amount of beads used: 456 g, pump flow rate: 650 mL/min, circumferential speed: 8 m/s, mill jacket temperature: 0°C). After hydrogen sulfide was flowed into the obtained slurry at a flow rate of 100 mL/min at room temperature for 90 minutes, the temperature was raised to 50°C while the hydrogen sulfide was flowing, and the hydrogen sulfide was flowed into the slurry at 50°C for 90 minutes. Further, the temperature was raised to 110°C while the hydrogen sulfide was flowing, and when the temperature reached 110°C, the flow of the hydrogen sulfide was stopped, and nitrogen ($N_2$) was flowed at a flow rate of 100 mL/min into the slurry at 110°C for 90 minutes. The slurry was cooled to room temperature and dried under reduced pressure at room temperature, thereby obtaining an amorphous sulfide solid electrolyte (6).

In addition, the obtained amorphous sulfide solid electrolyte (6) was depressurized at 200°C for 2 hours to obtain a crystalline solid electrolyte (6).

The residual amount of $Li_2S$ was measured using the obtained amorphous sulfide solid electrolyte (6), and the crystal type and the ionic conductivity were measured using the crystalline solid electrolyte (6). The measurement results were described in Table 4. The X-ray diffraction patterns of the amorphous sulfide solid electrolyte (6) and the crystalline solid electrolyte (6) were shown in Fig. 8.

Table 3 summarizes the outline of the production methods carried out in Examples 5 and 6. In the table, "r.t." means room temperature, and "$H_2S$" and "$N_2$" mean in a hydrogen sulfide stream and in a nitrogen stream, respectively.

[Table 3]

Table 3

| | Raw material | Solvent | Stirring at room temperature | Heating (1) | Temperature lowering | Pulverization |
|---|---|---|---|---|---|---|
| Example 5 | Slurry (1) | Ethylbenzene | r.t. for 1 hour | 50°C for 1 hour | - | - |
| | | Dibutyl ether | $H_2S$ | $H_2S$ | - | - |
| Example 6 | Slurry (2) | Toluene | r.t. for 90 min | 50°C for 90 min | from 50°C to r.t. | 30 min |
| | | Dibutyl ether | $H_2S$ | $H_2S$ | $H_2S$ | $N_2$ |

Table 3 (continued)

| | Temperature raising | Heating (1) | Temperature raising | Heating (2) |
|---|---|---|---|---|
| Example 5 | from 50°C to 100°C | 100°C for 1 hour | from 100°C to 110°C | 110°C for 1 hour |
| | $H_2S$ | $H_2S$ | $H_2S$ | $N_2$ |
| Example 6 | from r.t. to 50°C | 50°C for 90 min | from 50°C to 110°C | 110°C for 90 min |
| | $H_2S$ | $H_2S$ | $H_2S$ | $N_2$ |

[Table 4]

Table 4

| | Residual amount of $Li_2S$ | Crystal form | Ionic conductivity |
|---|---|---|---|
| Example 5 | 2% | R-II | 1.6 |
| Example 6 | 2% | R-II | 2.8 |

From the results of Examples 5 and 6, it was confirmed that by performing the heating (1) a plurality of times, the residual amount of $Li_2S$ can be further reduced as compared with Examples 1 to 4, and the ionic conductivity can be improved. In addition, from the comparison between Example 5 and Example 6, it was also confirmed that the ionic conductivity was further improved by pulverization during the heating (1) performed a plurality of times. Since the ionic conductivity is improved even though the residual amount of the raw material-containing substance is maintained, it is considered that by combining the heating (1) and the pulverization, the miscibility of the intermediate is further improved, and thus more of the crystal form R-II of the crystalline solid electrolyte is formed. As a result, it was confirmed that the ionic conductivity of the obtained sulfide solid electrolyte is further improved.

Industrial Applicability

According to the method for producing a sulfide solid electrolyte of the present embodiment, since a high temperature is not required at the time of production, a sulfide solid electrolyte having a target crystal structure can be produced.

The sulfide solid electrolyte obtained by the production method of the present embodiment is suitably used for lithium ion batteries, in particular, lithium ion batteries used for information-related devices such as personal computers, video cameras, and mobile phones, and communication devices.

**Claims**

**1.** A method for producing a sulfide solid electrolyte, comprising: heating a raw material-containing substance while bringing hydrogen sulfide into contact with the raw material-containing substance (heating (1)), wherein a temperature ($T_1$ (°C)) of the heating (1) is 170°C or lower.

**2.** The method for producing a sulfide solid electrolyte according to claim 1, wherein the heating (1) is performed under a stream of hydrogen sulfide.

**3.** The method for producing a sulfide solid electrolyte according to claim 2, further comprising heating (heating (2)) after stopping the stream of hydrogen sulfide, wherein a temperature ($T_2$ (°C)) of the heating (2) is 170°C or lower.

**4.** The method for producing a sulfide solid electrolyte according to claim 3, wherein the heating (2) is performed in an atmosphere of nitrogen or a rare gas, or is performed under reduced pressure.

**5.** The method for producing a sulfide solid electrolyte according to claim 3 or 4, wherein $T_1$ and $T_2$ satisfy a relationship of $T_1 \leq T_2 \leq 170°C$.

**6.** The method for producing a sulfide solid electrolyte according to claim 5, wherein the temperature raising from $T_1$ to $T_2$ is performed under a stream of hydrogen sulfide.

**7.** The method for producing a sulfide solid electrolyte according to any one of claims 1 to 6, wherein a median diameter ($D_{50}$) of the raw material-containing substance is less than 15 $\mu$m.

**8.** The method for producing a sulfide solid electrolyte according to any one of claims 1 to 7, further comprising pulverization.

**9.** The method for producing a sulfide solid electrolyte according to any one of claims 1 to 8, wherein the heating (1) is

performed by being divided into at least two times.

**10.** The method for producing a sulfide solid electrolyte according to claim 8 or 9, wherein the heating (1) is performed by being divided into at least two times, and the heating in the heating (1), the pulverization, and the heating in the heating (1) are performed in this order.

**11.** The method for producing a sulfide solid electrolyte according to any one of claims 8 to 10, wherein the pulverization includes pulverization of the raw material-containing substance.

**12.** The method for producing a sulfide solid electrolyte according to any one of claims 1 to 11, wherein the raw material-containing substance is a mixture of sulfide solid electrolyte raw materials containing at least one selected from a lithium atom, a sulfur atom, and a phosphorus atom.

[Fig. 1]

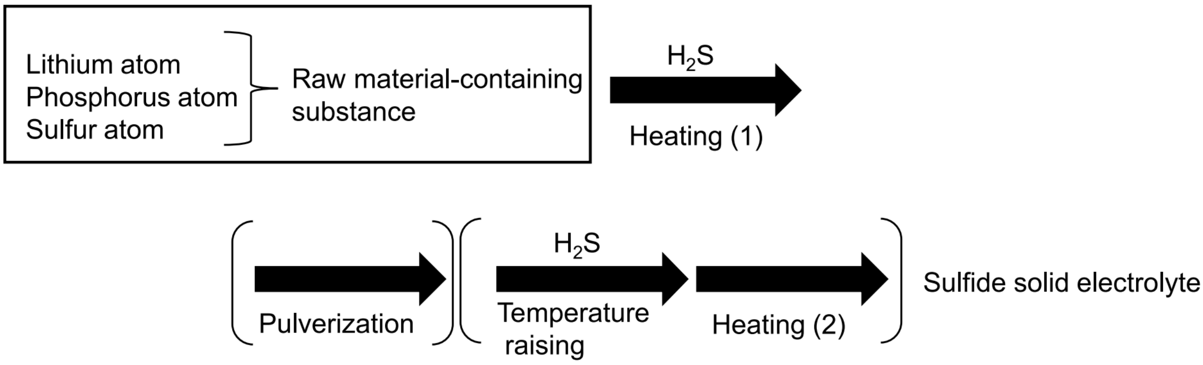


[Fig. 2]

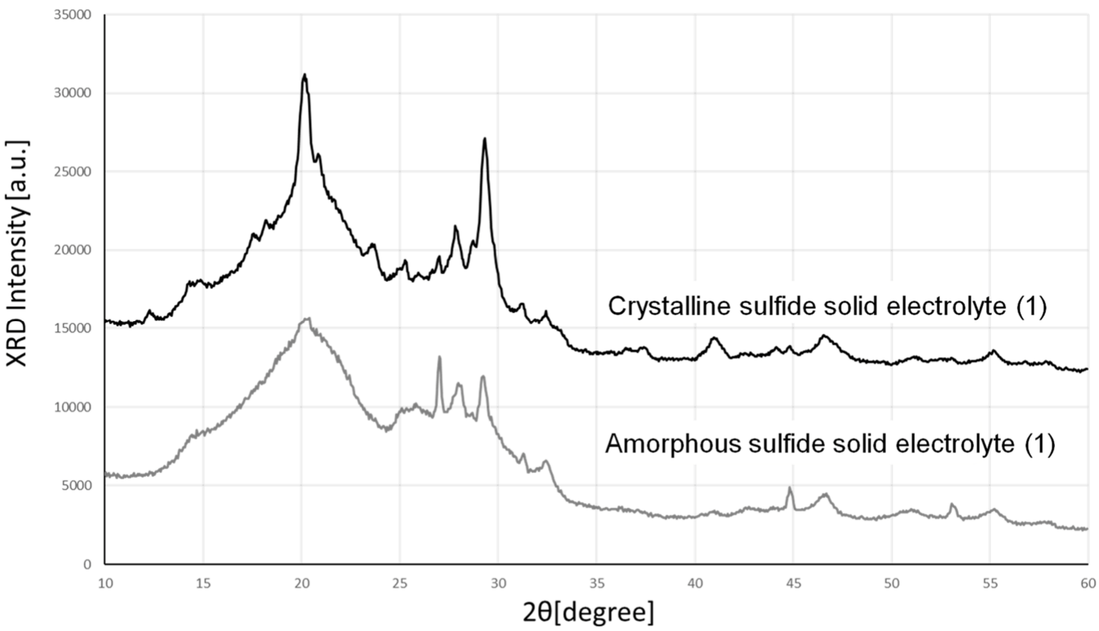


[Fig. 3]

2/4

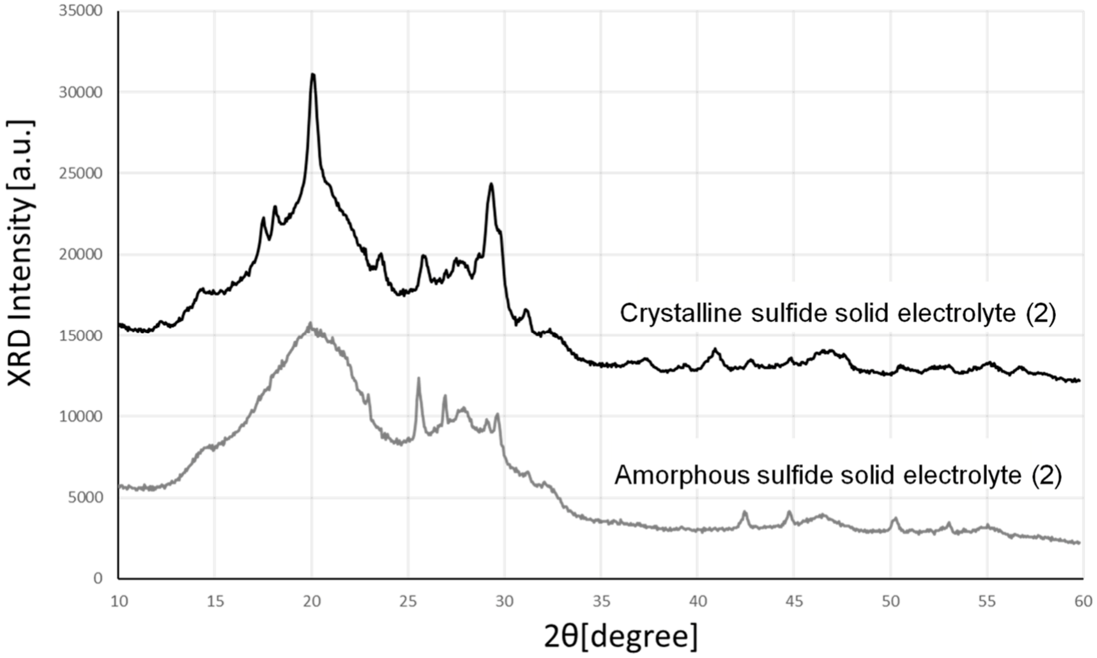
35000
30000
25000
20000
15000
10000
5000
0
XRD Intensity [a.u.]
10
15
20
25
30
35
40
45
50
55
60
2θ[degree]
Crystalline sulfide solid electrolyte (2)
Amorphous sulfide solid electrolyte (2)

[Fig. 4]

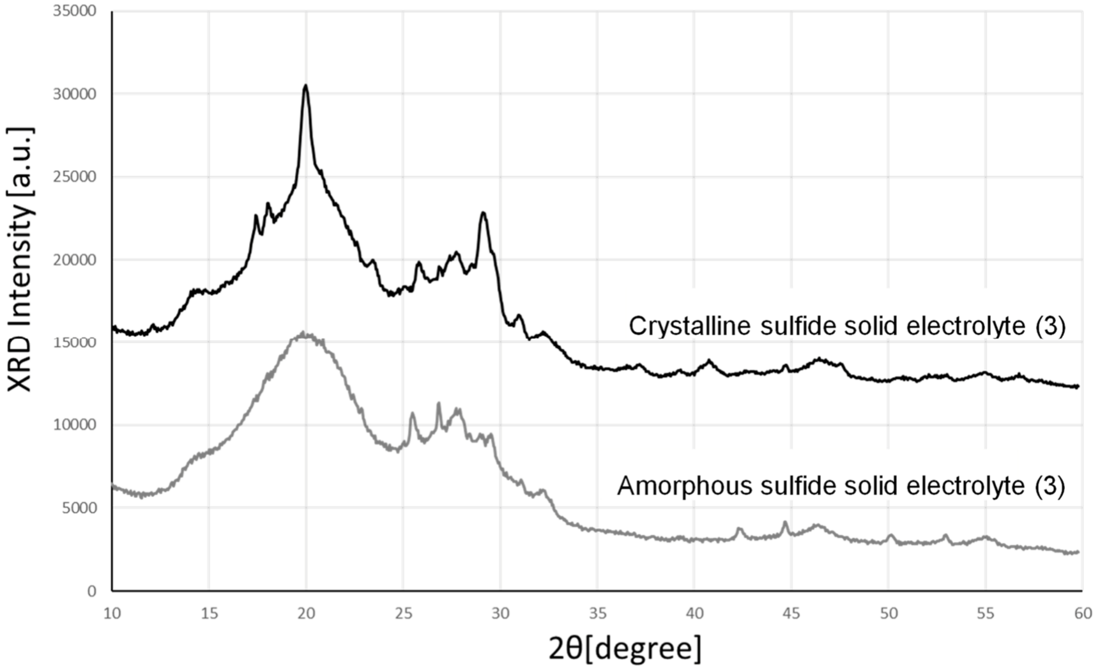
35000
30000
25000
20000
15000
10000
5000
0
XRD Intensity [a.u.]
10
15
20
25
30
35
40
45
50
55
60
2θ[degree]
Crystalline sulfide solid electrolyte (3)
Amorphous sulfide solid electrolyte (3)

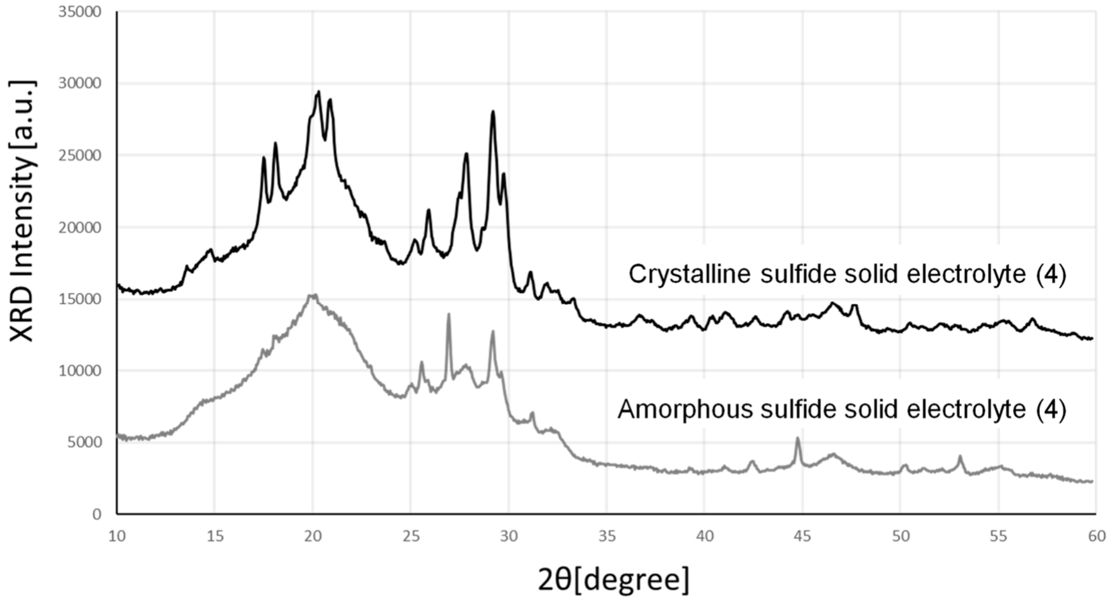
XRD Intensity [a.u.]
2θ[degree]
Crystalline sulfide solid electrolyte (4)
Amorphous sulfide solid electrolyte (4)
0
5000
10000
15000
20000
25000
30000
35000
10
15
20
25
30
35
40
45
50
55
60

[Fig. 6]

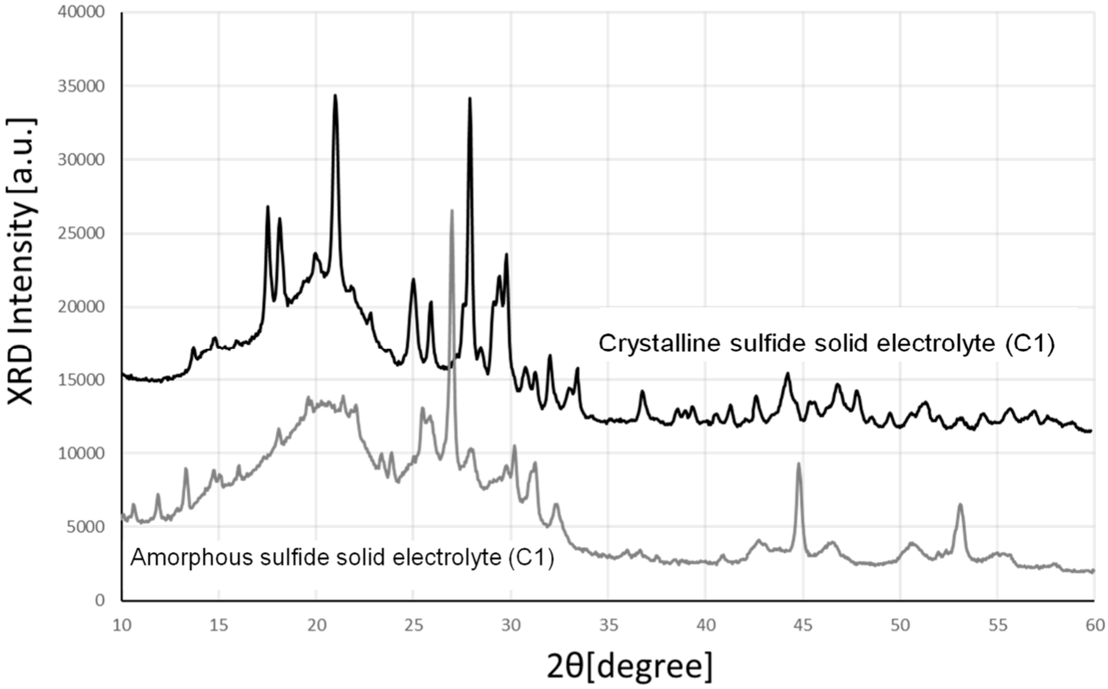
XRD Intensity [a.u.]
2θ[degree]
Crystalline sulfide solid electrolyte (C1)
Amorphous sulfide solid electrolyte (C1)
0
5000
10000
15000
20000
25000
30000
35000
40000
10
15
20
25
30
35
40
45
50
55
60

[Fig. 7]

4/4

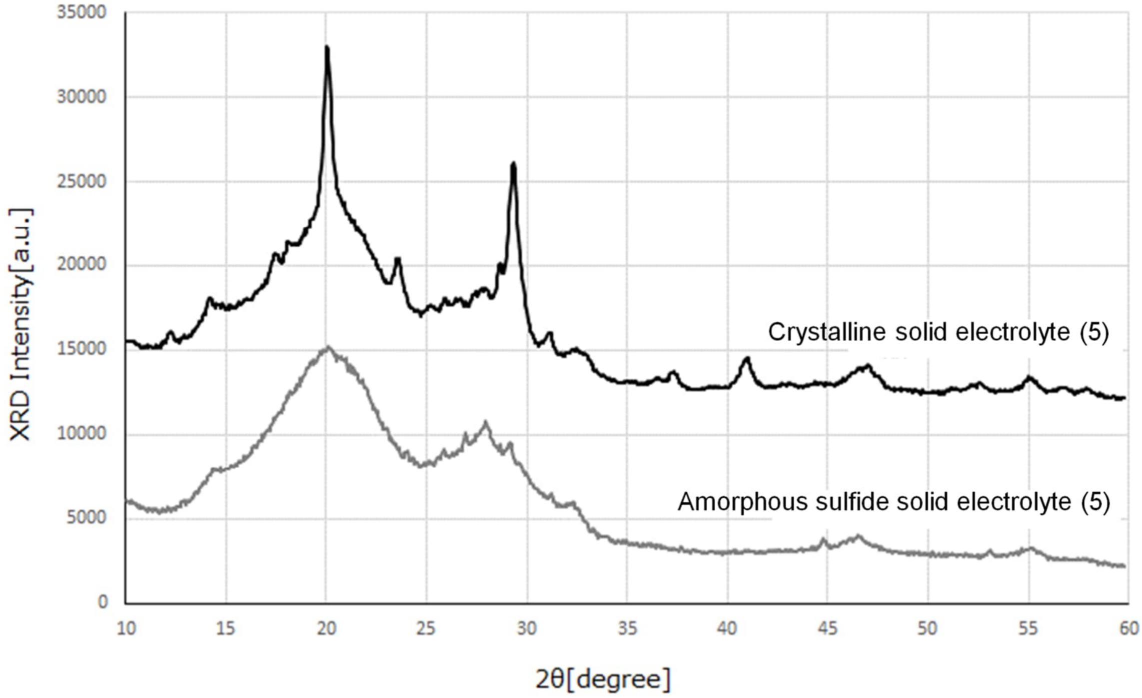
35000
30000
25000
20000
15000
10000
5000
0
XRD Intensity[a.u.]
Crystalline solid electrolyte (5)
Amorphous sulfide solid electrolyte (5)
10
15
20
25
30
35
40
45
50
55
60
2θ[degree]

[Fig. 8]

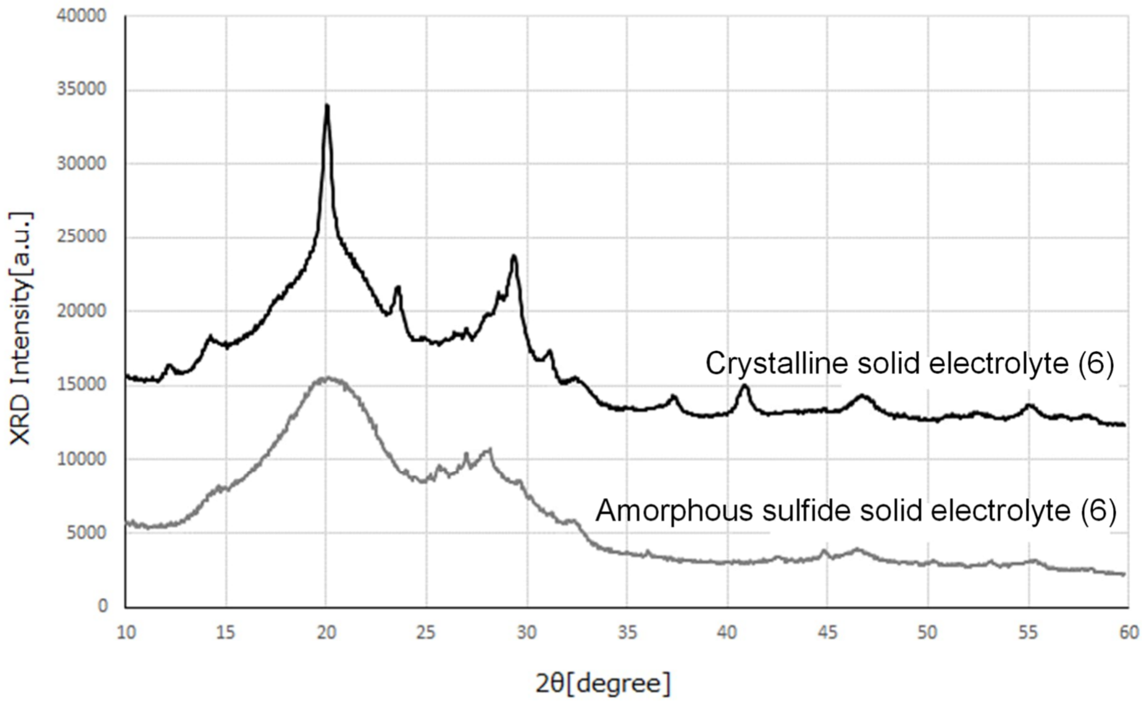
40000
35000
30000
25000
20000
15000
10000
5000
0
XRD Intensity[a.u.]
Crystalline solid electrolyte (6)
Amorphous sulfide solid electrolyte (6)
10
15
20
25
30
35
40
45
50
55
60
2θ[degree]

## INTERNATIONAL SEARCH REPORT

International application No.
**PCT/JP2024/000882**

**A. CLASSIFICATION OF SUBJECT MATTER**

***H01B 13/00***(2006.01)i; ***H01B 1/10***(2006.01)i; ***H01M 10/0562***(2010.01)i
FI: H01B13/00 Z; H01M10/0562; H01B1/10

According to International Patent Classification (IPC) or to both national classification and IPC

**B. FIELDS SEARCHED**

Minimum documentation searched (classification system followed by classification symbols)

H01B13/00; H01B1/10; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-95522 A (IDEMITSU KOSAN CO., LTD.) 21 June 2018 (2018-06-21) paragraph [0099] | 1, 2, 12 |
| Y | | 7, 8, 11 |
| A | | 3-6, 9, 10 |
| X | JP 2019-169459 A (IDEMITSU KOSAN CO., LTD.) 03 October 2019 (2019-10-03) paragraph [0050] | 1, 2, 12 |
| Y | | 7, 8, 11 |
| A | | 3-6, 9, 10 |
| X | JP 2014-167845 A (TOYOTA JIDOSHA KABUSHIKI KAISHA) 11 September 2014 (2014-09-11) paragraphs [0034], [0041], [0042] | 1, 2, 12 |
| Y | | 7, 8, 11 |
| A | | 3-6, 9, 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/000882**

C. DOCUMENTS CONSIDERED TO BE RELEVANT

| Category* | Citation of document, with indication, where appropriate, of the relevant passages | Relevant to claim No. |
|---|---|---|
| Y | JP 2018-97954 A (TOYOTA JIDOSHA KABUSHIKI KAISHA) 21 June 2018 (2018-06-21) paragraphs [0046]-[0052] | 7, 8, 11 |
| Y | JP 2019-186086 A (FURUKAWA CO., LTD.) 24 October 2019 (2019-10-24) paragraph [0091] | 7, 8, 11 |
| Y | JP 2020-95953 A (IDEMITSU KOSAN CO., LTD.) 18 June 2020 (2020-06-18) paragraph [0060] | 7, 8, 11 |

Form PCT/ISA/210 (second sheet) (July 2022)

**INTERNATIONAL SEARCH REPORT**
**Information on patent family members**

International application No.
**PCT/JP2024/000882**

| Patent document cited in search report | Publication date (day/month/year) | Patent family member(s) | Publication date (day/month/year) |
|---|---|---|---|
| JP 2018-95522 A | 21 June 2018 | US 2018/0162730 A1<br>paragraphs [0125], [0126] | |
| JP 2019-169459 A | 03 October 2019 | US 2019/0074544 A1<br>paragraphs [0094], [0095] | |
| JP 2014-167845 A | 11 September 2014 | (Family: none) | |
| JP 2018-97954 A | 21 June 2018 | US 2018/0166740 A1<br>paragraphs [0068]-[0076] | |
| JP 2019-186086 A | 24 October 2019 | (Family: none) | |
| JP 2020-95953 A | 18 June 2020 | US 2020/0185767 A1<br>paragraphs [0125]-[0127] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014167845 A
- JP 2018097954 A
- WO 2020213340 A
- WO 2020105737 A
- JP 2013016423 A


### Non-patent literature cited in the description


- **KANNO et al.** *Journal of The Electrochemical Society*, 2001, vol. 148 (7), A742-746
- *Solid State Ionics*, 2006, vol. 177, 2721-2725